(19) Europäisches Patentamt
European Patent Office
Office européen des brevets

(11) **EP 4 417 949 A1**

(12) **EUROPÄISCHE PATENTANMELDUNG**

(43) Veröffentlichungstag:
**21.08.2024 Patentblatt 2024/34**

(21) Anmeldenummer: **23156533.4**

(22) Anmeldetag: **14.02.2023**

(51) Internationale Patentklassifikation (IPC):
***G01K 7/00*** *(2006.01)*

(52) Gemeinsame Patentklassifikation (CPC):
**G01K 7/00;** G01K 2217/00

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Helmut-Schmidt-Universität, Universität der Bundeswehr Hamburg 22043 Hamburg (DE)**

(72) Erfinder:
• **Möbius, Patrick**
**12559 Berlin (DE)**

• **Schräder, Johannes**
**21614 Buxtehude (DE)**
• **Meyer, Marc**
**20354 Hamburg (DE)**
• **Grumm, Florian**
**22087 Hamburg (DE)**
• **Schulz, Detlef**
**22043 Hamburg (DE)**

(74) Vertreter: **Günther, Constantin et al Meissner Bolte Patentanwälte Rechtsanwälte Partnerschaft mbB Plathnerstraße 3A 30175 Hannover (DE)**

(54) **VERFAHREN ZUM ERMITTELN WENIGSTENS EINER THERMISCHEN KENNGRÖSSE, COMPUTERPROGRAMM UND MESSSYSTEM**

(57) Die Erfindung betrifft ein Verfahren zum Ermitteln wenigstens einer thermischen Kenngröße eines elektrischen Systems anhand einer Auswertung von Resonanzstellen des elektrischen Systems. Die Erfindung betrifft außerdem ein Computerprogramm zur Durchführung eines solchen Verfahrens sowie ein Messsystem mit wenigstens einer Steuereinheit, die zur Durchführung des Verfahrens eingerichtet ist.

Fig. 12

**Beschreibung**

Die Erfindung betrifft ein Verfahren zum Ermitteln wenigstens einer thermischen Kenngröße eines elektrischen Systems anhand einer Auswertung von Resonanzstellen des elektrischen Systems. Die Erfindung betrifft außerdem ein Computerprogramm zur Durchführung eines solchen Verfahrens sowie ein Messsystem mit wenigstens einer Steuereinheit, die zur Durchführung des Verfahrens eingerichtet ist.

Als eine solche thermische Kenngröße eines elektrischen Systems kommt insbesondere die Temperatur an einer oder mehreren Stellen des elektrischen Systems in Frage. Um eine solche Temperatur messtechnisch zu bestimmen, ist es bekannt, Temperatursensoren einzusetzen.

Das fundamentale technische Problem besteht darin, dass sich elektrische Systeme durch u.a. Strom-Wärme-Verluste und externe Einflüsse erwärmen. Werden dabei die material- bzw. systemspezifischen Temperaturgrenzwerte überschritten, kann es zu Degradations- und Deteriorationseffekten kommen und die mechanischen und elektrischen Systemeigenschaften können sich, in der Regel unerwünscht, verändern.

Aktuell ist es oft, besonders bei verteilten Systemen, nicht sinnvoll, die Temperaturgrenzwerte im operativen Betrieb durch Temperatursensoren messtechnisch zu bestimmen und zu überwachen, weil ökonomische und logistisch/organisatorische Aspekte das Verbringen von verteilten Temperatursensoren und den damit verbundenen Aufwand nicht rechtfertigen. Anstelle dessen werden, bis auf spezielle Ausnahmen, die konservativ berechneten Grenzwerte des Betriebsstroms als abstrahierte Hilfsgröße herangezogen, um u.a. die Systemdeterioration zu verhindern.

Der Erfindung liegt daher die Aufgabe zugrunde, bei beliebigen elektrischen Systemen, die insbesondere auch sehr große elektrische Systeme wie Überland-Energieversorgungsleitungen, Freileitungen und andere Energieübertragungskabel umfassen, mit geringerem Aufwand wenigstens eine thermische Kenngröße zu ermitteln.

Diese Aufgabe wird durch ein Verfahren zum Ermitteln mit wenigstens einer thermischen Kenngröße eines elektrischen Systems anhand einer Auswertung von Resonanzstellen des elektrischen Systems gelöst, wie im Anspruch 1 angegeben ist. Das Verfahren umfasst folgende Schritte:

a) Beaufschlagen des elektrischen Systems mit einer Systemanregung, beispielsweise einem Anregungs-Wechselstromsignal oder einem Pulsmuster, wobei die Systemanregung eine oder mehrere vorab ermittelte Anregungsfrequenzen beinhaltet, die zum Anregen des elektrischen Systems an einer oder mehreren vorab ermittelten Resonanzstellen des elektrischen Systems geeignet sind,

b) Messen wenigstens des Eingangsstroms und des Ausgangsstroms des elektrischen Systems und/oder anderer elektrischer Kenngrößen, aus denen die frequenz- und zeitabhängige Impedanz des elektrischen Systems bestimmt werden kann,

c) Ermitteln von Ergebnisgrößen durch Auswerten der in Schritt b) gemessenen elektrischen Kenngrößen an einer oder mehreren vorab ermittelten Resonanzstellen des elektrischen Systems durch ein oder mehrere analytische Transformationsverfahren,

d) Bestimmen wenigstens einer thermischen Kenngröße des elektrischen Systems durch Inbeziehungsetzen der im Schritt c) ermittelten Ergebnisgrößen zu vorab für das elektrische System in einem definierten Nennzustand bestimmten charakteristischen Nenngrößen.

Der thermische Einfluss auf die Resonanzstellen eines elektrischen Systems wirkt sich auf diverse charakteristische Größen aus. Hier sind insbesondere die Übertragungsfunktion des Ein- und Ausgangsstroms und die Systemimpedanz zu nennen. Die Auswahl des geeigneten Kriteriums für die Systemanregung ist anwendungsfallabhängig und beeinflusst die benötigte Messtechnik, die benötigte Zugänglichkeit und ggf. vorab zu bestimmende Systemeigenschaften.

Die Besonderheit des erfindungsgemäßen Verfahrens liegt somit in der gezielten Nutzung der charakteristischen Eigenschaften elektrischer Systeme bei deren Resonanzfrequenzen, d.h. auftretenden Resonanzen infolge elektrischer Beaufschlagung des Systems. Hierzu werden die typischen Resonanzstellen des Systems zunächst bestimmt, und im späteren Messbetrieb wird zumindest bei einer oder bei mehreren Resonanzstellen eine Anregung mittels elektrischer Signale durchgeführt und die Veränderung der Amplitude der Resonanzstelle ausgewertet.

Die Erfindung löst somit die zuvor genannten und alle im Weiteren aufgeführten technischen Probleme durch die grundlegende Erkenntnis, dass das Übertragungsverhalten elektrischer Systeme von der Betriebstemperatur abhängt und diese Abhängigkeit in den hochfrequenten Resonanzstellen des Systems signifikant und messbar ist.

$$\alpha(\theta = \theta_1) = \frac{I_{aus}(f_{Anregung}, \theta_1)}{I_{ein}(f_{Anregung}, \theta_1)} \ I$$

$$\alpha(\theta = \theta_2) = \frac{I_{aus}(f_{Anregung}, \theta_2)}{I_{ein}(f_{Anregung}, \theta_2)} \; \text{II}$$

$$\alpha(\theta_1) \, ! = \alpha(\theta_2) \; \text{III}$$

$$Z_{12}(\theta_1) \, ! = Z_{12}(\theta_2) \; \text{IV}$$

$$max \, |\alpha(\theta_{min}) - \alpha(\theta_{max})| \; und \; \frac{d(|\alpha(\theta_{min}) - \alpha(\theta_{max})|)}{df} = 0 \; f\ddot{u}r \; f_{Anregung} = \; f_{Resonanz} \text{V}$$

Die thermisch bedingte Veränderung des resistiven Anteils und des resistiv-reaktiven Verhältnisses sorgt für eine Dämpfung und Verschiebung der Resonanzstelle. Physikalische Grundlage ist die mit der Temperatur ansteigende kinetische Energie der Teilchen des Leitermaterials. Analytisch wird dadurch z.B. die Permittivität verändert, was eine Widerstandsänderung des Systems zur Folge hat.

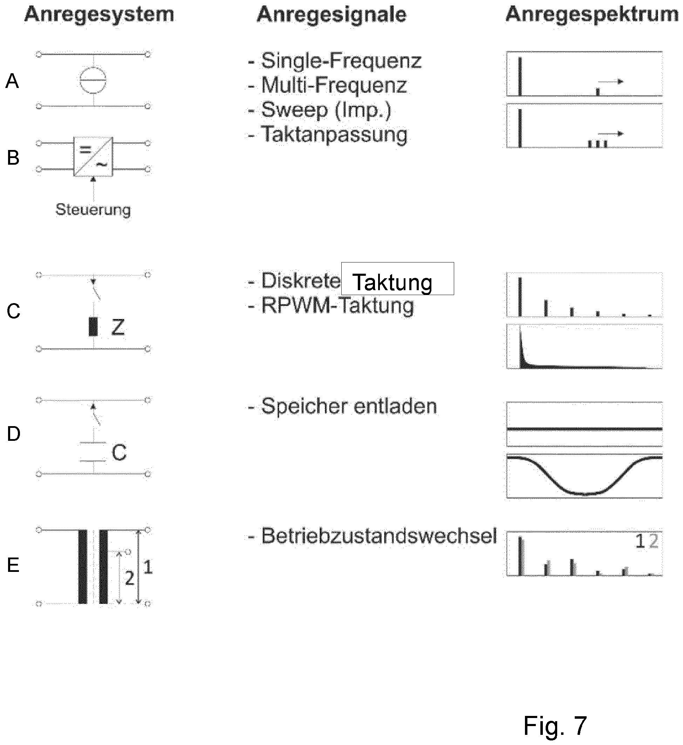

Das Beaufschlagen des elektrischen Systems mit einer Systemanregung kann durch Einspeisen eines zusätzlichen Wechselstromsignals, Belasten eines zufällig gepulsten Lastverlaufs und/oder durch ohnehin in das elektrische System eingespeiste Wechselstromsignale erfolgen, siehe Fig. 7. Das Messen des Eingangsstroms und des Ausgangsstroms kann durch handelsübliche Stromsensoren durchgeführt werden. Die Bestimmung der wenigstens einen thermischen Kenngröße kann im Schritt d) mit für die Beurteilung der thermischen Belastung des elektrischen Systems hinreichender Genauigkeit durchgeführt werden. Es ist für viele Anwendungsfälle dabei keine so hohe Messgenauigkeit erforderlich, wie sie mit Temperatursensoren möglich wäre. Dementsprechend kann das erfindungsgemäße Verfahren ganz ohne Temperatursensoren durchgeführt werden. Es ist auch möglich, beispielsweise im elektrischen System bereits vorhandene Temperatursensoren ebenfalls heranzuziehen, d.h. deren Signale z.B. zur Stützung und/oder zur Plausibilitätsprüfung bei der Bestimmung der wenigstens einen thermischen Kenngröße im Schritt d) heranzuziehen.

Die charakteristischen Nenngrößen des elektrischen Systems können z.B. in einem definierten Nennzustand bestimmt werden, in dem das elektrische System keiner Belastung ausgesetzt ist und eine bestimmte Umgebungstemperatur vorhanden ist, oder zumindest, wenn keine besonders hohe Belastung des Systems vorhanden ist.

Beispielsweise kann als Ergebnisgröße im Schritt c) die frequenz- und zeitabhängige Impedanz des elektrischen Systems bestimmt werden. Im Schritt d) kann diese Ergebnisgröße in Beziehung zu einer Nennimpedanz des elektrischen Systems im Nennzustand gesetzt werden, beispielsweise durch Quotientenbildung. Hieraus kann dann die thermische Kenngröße abgeleitet werden, beispielsweise analytisch anhand einer vorab bestimmten, definierten thermischen Kennlinie des elektrischen Systems oder anhand von vorab bestimmten Tabellen.

Gemäß einer vorteilhaften Ausgestaltung der Erfindung ist vorgesehen, dass die Schritte a) bis d) des Anspruchs 1 in regelmäßigen oder unregelmäßigen Zeitabständen wiederholt werden. Hierdurch kann eine permanente thermische Überwachung des elektrischen Systems durchgeführt werden.

Gemäß einer vorteilhaften Ausgestaltung der Erfindung ist vorgesehen, dass die Zeitabstände verringert werden, wenn die bestimmte thermische Kenngröße sich einem vorbestimmten Grenzwert annähert. Auf diese Weise kann die Überwachung intensiviert werden, wenn absehbar ist, dass sich das elektrische System einem kritischen Zustand annähert. Ist die thermische Kenngröße ausreichend weit vom vorbestimmten Grenzwert entfernt, können die Zeitabstände so weit vergrößert werden, dass eventuelle Störungen durch das Anregungs-Wechselstromsignal minimiert werden.

Gemäß einer vorteilhaften Ausgestaltung der Erfindung ist vorgesehen, dass die Wiederholungsrate der Schritte a) bis d) des Anspruchs 1 in Abhängigkeit von einer oder mehreren der folgenden Kriterien festgelegt wird:

 i) Änderung der Netzimpedanz des elektrischen Systems am Netzverknüpfungspunkt,
 ii) Plausibilität der Ergebnisgrößen,
 iii) Grad der Übereinstimmung der Ergebnisgrößen mit einem thermischen Modell des elektrischen Systems.

Auch hierdurch kann die Intensität der thermischen Überwachung des elektrischen Systems an den jeweils vorliegenden Betriebszustand optimal angepasst werden.

Gemäß einer vorteilhaften Ausgestaltung der Erfindung ist vorgesehen, dass automatisch wenigstens eine elektrische Belastungsgröße, mit der das elektrische System belastet ist, verringert wird, wenn die bestimmte thermische Kenngröße einen vorbestimmten Grenzwert erreicht oder überschreitet. Hierdurch kann automatisch eine Überlastung des elektrischen Systems verhindert werden. Dementsprechend können Schäden am elektrischen System durch die Überlastung vermieden werden. Je nach Zustand des elektrischen Systems ist es auch denkbar, dass die elektrische Belastungsgröße vollständig abgeschaltet wird.

Gemäß einer vorteilhaften Ausgestaltung der Erfindung ist vorgesehen, dass vorab in einem definierten Nennzustand des elektrischen Systems folgende Schritte ausgeführt werden:

a) Ermitteln von Resonanzstellen des elektrischen Systems,
b) Ermitteln von Anregungsfrequenzen zum Anregen des elektrischen Systems an einer oder mehreren Resonanzstellen.

Diese Schritte müssen somit bei der späteren laufenden thermischen Überwachung gemäß den Schritten a) bis d) des Anspruchs 1 nicht mehr durchgeführt werden, sondern sie werden nur vorab einmalig oder bei bestimmten Ereignissen gegebenenfalls erneut durchgeführt.

Gemäß einer vorteilhaften Ausgestaltung der Erfindung ist vorgesehen, dass zusätzliche systemfremde Resonanzstellen erzeugt und zur Ermittlung des thermischen Zustands des elektrischen Systems genutzt werden. Auf diese Weise kann das erfindungsgemäße Verfahren auch vorteilhaft bei elektrischen Systemen ausgeführt werden, die keine oder zu wenige ausgeprägte Resonanzstellen haben oder diese Resonanzstellen bei ungeeigneten Frequenzen liegen. Solche zusätzlichen systemfremden Resonanzstellen können z.B. durch Hinzuschaltung elektrischer Bauelemente an das elektrische System erzeugt werden.

Gemäß einer vorteilhaften Ausgestaltung der Erfindung ist vorgesehen, dass das elektrische System mindestens eine geerdete Energieübertragungsleitung aufweist, wobei für die Bestimmung der wenigstens einen thermischen Kenngröße wenigstens ein Schirmstrom der geerdeten Energieübertragungsleitung gemessen und ausgewertet wird. Auf diese Weise können mit dem erfindungsgemäßen Verfahren zusätzliche Parameter insbesondere bei elektrischen Systemen in Form von geschirmten Kabeln bestimmt werden. Hierbei ist es vorteilhaft, wenn als zusätzliche Messwerte die Schirmströme an allen Erdungspunkten der Energieübertragungsleitung gemessen werden und in die Auswertung einbezogen werden.

Gemäß einer vorteilhaften Ausgestaltung der Erfindung ist vorgesehen, dass das elektrische System als eine Anordnung elektrischer Energieübertragungsleitungen ausgebildet ist. Das elektrische System kann insbesondere als eine Anordnung von Überland-Energieübertragungsleitungen ausgebildet sein. Mit dem erfindungsgemäßen Verfahren können solche elektrischen Systeme mit relativ großer räumlicher Ausdehnung besonders einfach, effizient und kostengünstig hinsichtlich der thermischen Belastung überwacht werden.

Die eingangs genannte Aufgabe wird außerdem gelöst durch ein Computerprogramm mit Programmcodemitteln eingerichtet zur Durchführung eines Verfahrens der zuvor erläuterten Art, wenn das Computerprogramm auf einem Rechner ausgeführt wird. Beispielsweise kann das Computerprogramm auf einem Rechner einer Steuereinheit eine nachfolgend erläuterten Messsystems ausgeführt werden. Auch hierdurch können die zuvor erläuterten Vorteile realisiert werden.

Die eingangs genannte Aufgabe wird außerdem gelöst durch ein Messsystem mit wenigstens einer Steuereinheit und an die Steuereinheit angeschlossenen Stromsensoren, die zur Erfassung von Eingangsströmen und Ausgangsströmen eines zu untersuchenden elektrischen Systems eingerichtet sind. Hierbei ist die Steuereinheit zur Durchführung eines Verfahrens der zuvor erläuterten Art eingerichtet. Die Steuereinheit kann z.B. einen Rechner haben, durch den das Verfahren als Computerprogramm ausgeführt wird. Auch hierdurch können die zuvor erläuterten Vorteile realisiert werden.

Die Erfindung wird nachfolgend anhand von Ausführungsbeispielen unter Verwendung von Zeichnungen näher erläutert.

Es zeigen

Figur 1    elektrische Systeme in verallgemeinerter Darstellung als Zweitor- bzw. Pseudo-Zweitor,
Figur 2    ein Zweitor als verteiltes Parameter-Modell,
Figur 3    ein Zweitor als abschnittsweise verteiltes Parameter-Modell,
Figur 4    eine Anordnung zur Erzeugung einer künstlichen Resonanzstelle,
Figur 5    die Einbindung eines elektrischen Systems in unterschiedliche Anlagen- und Netzstrukturen,
Figur 6    ein Ablaufschema des erfindungsgemäßen Verfahrens,
Figur 7    Anregungssysteme zur Erzeugung von Systemanregungen durch u.a. Anregungs-Wechselstromsignale,
Figur 8    Simulationsergebnisse des Übertragungsverhältnisses,
Figur 9    Temperaturabhängigkeit des Übertragungsverhältnisses bei unterschiedlichen Frequenzen,
Figur 10    ein Messaufbau zur thermischen Bewertung eines elektrischen Systems,
Figur 11    Interaktionen einer Steuereinheit zur thermischen Bewertung eines elektrischen Systems,
Figur 12    qualitative Darstellung des Auswahlprozesses für Anregungsfrequenzen,
Figur 13    Kriterien zur Neukonditionierung anhand des Übertragungsfaktors,

Figur 14    Messaufbau zur thermischen Bewertung eines elektrischen Energieübertragungssystems unter Berücksichtigung der Schirmströme,

Figur 15    Übertragungscharakteristik bei inhomogenen Erwärmungen,

Figur 16    einen Verlauf der Systemimpedanz eines elektrischen Systems bei 10°C,

Figur 17    den Verlauf der Systemimpedanz des Systems gemäß Figur 16 bei 80°C,

Figur 18    die Systemimpedanz-Differenz ermittelt durch Differenzbildung der Verläufe aus den Figuren 16 und 17.

Definition des Umfangs "elektrische Systeme"

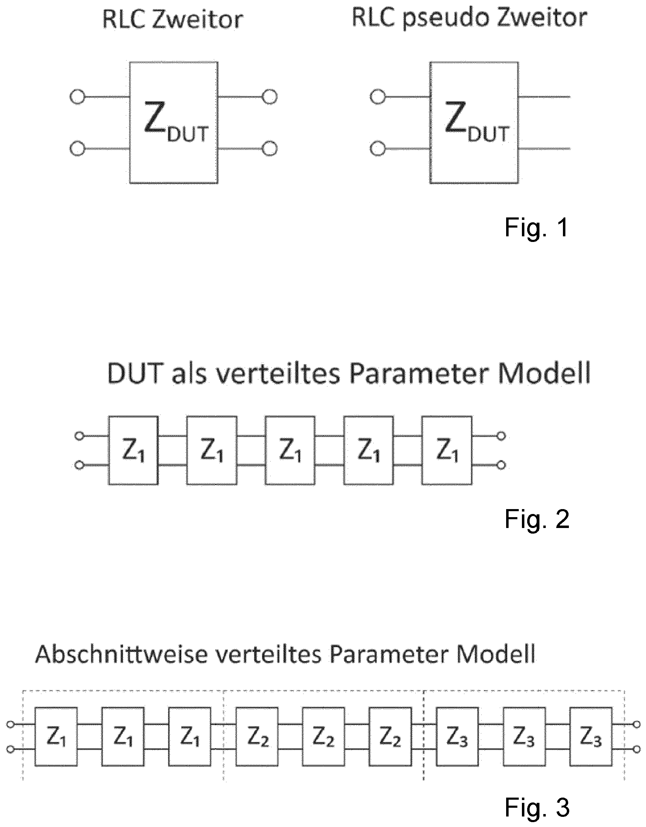

Das Verfahren ist allgemein für elektrische Systeme anwendbar. Diese werden als zwei- bzw. pseudo-zwei-Tor RLC Elemente in verteilten Parametermodellen beschrieben, siehe Figur 1 und Figur 2. Die Modellierung elektrischer Systeme und gesamter Systemstrukturen für breite Frequenzspektren als RLC-Elemente ist gängige Praxis [1-3]. Verschiedene Systeme werden entsprechend unterschiedlich parametrisiert. Systeme mit mehreren (Teil-)Komponenten, verteilte Systeme und Systeme mit unterschiedlichen thermischen Modellabschnitten lassen sich durch die Unterteilung des verteilten Parametermodells in Abschnitte mit gleichen Eigenschaften darstellen, siehe Figur 3. Die Wahl der beschreibenden Systemcharakteristik ist mit der Systemimpedanz bzw. dem Impedanzbelag beschrieben, kann jedoch durch beliebige zulässige Modelle substituiert werden. Die Modellierung erfolgt hinreichend detailliert für den jeweiligen Anwendungsfall. Hierbei können systemspezifische Einflussgrößen berücksichtigt werden. Aufgrund der unterschiedlichen Modellausführung wurden die technischen Probleme im Folgenden am Bespiel von elektrischen Energieübertragungsleitungen erläutert. Das Verfahren ist mit einer Anpassung der zwei-Tor RLC Eigenschaften auf alle anderen elektrischen Systeme übertragbar.

Das Verfahren ist für einphasige, symmetrische mehrphasige und asynchron belastete mehrphasige Gleich- und Wechselstromsysteme geeignet. In der Ausführung werden Sensoren für jede einzelne Phase benötigt. Sowohl in Gleich- als auch in Wechselspannungssystemen können Strom- und/oder Spannungs-Harmonische überlagert und ausgewertet werden. Gegebenenfalls auftretende Phasenkopplungseffekte sind in den verteilten Parametermodellen, z.B. mittels Gegeninduktivitäten, zu berücksichtigen. In mehrphasigen Systemen werden die Phasen je nach Anwendungsfall entweder einzeln ausgewertet, z.B. für die Bestimmung des thermischen Zustandes der maximal belasteten Phase, oder für symmetrische Belastungen ein einphasiges Ersatzschaltbild bzw. für asymmetrische Belastungen in das Modell der symmetrischen Komponenten überführt, um z.B. zur Systemidentifikation beizutragen.

Vorhandene und künstliche Resonanzstellen

Die Erfindung fokussiert sich auf die Resonanzstellen elektrischer Systeme, da in diesen Frequenzbereichen die temperaturabhängigen resistiven Anteile einen signifikanten Einfluss haben und somit Unterschiede in der Betriebstemperatur deutlich werden. Besonders physisch kleine Systeme und solche mit speziellen Ausgangsfiltern haben jedoch entweder keine bzw. schwache Resonanzstellen oder diese liegen bei extrem hohen Frequenzen. Um die Erfindung nichtsdestotrotz anwenden zu können, können z.B. Parallel- oder Reihensysteme mit vordefiniertem Impedanzgang während der Messungen dem zu untersuchenden elektrischen System (DUT - device under test) zugeschaltet werden, um so künstliche Resonanzstellen in nutz- und auswertbaren Frequenzbändern zu schaffen.

Modellierung der Systeme

Eine bespielhafte Auswahl und Kategorisierung von elektrischen Systemen, auf die die Erfindung vorteilhaft anwendbar ist, ist in Tabelle 1 dargestellt. Unterschieden wird hier zwischen Systemen, die inhärent zwei-Tor Charakteristiken haben, wie z.B. Energieübertragungsleitungen, und Systemen, deren Übertragungsverhalten auch als ein-Tor beschrieben werden kann. Relevant ist die Differenzierung u.a. für die Auswahl des Lösungsalgorithmus und der Messpunkte.

Begründung und Beispiele für die Relevanz und die aktuelle Notwendigkeit der Erfindung

Die Kenntnis über die tatsächliche Betriebstemperatur hat viele Vorteile. Anwendungsgebiete können u.a. die Erweiterung von Übertragungskapazitäten elektrischer Leitungen, das "active health monitoring", das "predictive health monitoring" (Alterungserscheinungen) und die Erweiterung von Sicherheitssystemen sein [4].

Der Bedarf an konkreten Lösungen für ökonomische, nichtinvasive und operativ einsetzbare Verfahren, welche Systemzustände identifizieren können und somit Systemdefekte verhindern können, ist enorm. Für das Ausführungsbeispiel und die Anwendung solcher Verfahren für Kabelstrecken gibt es eine aktuelle Ausschreibung, die praktikable Lösungen mit bis zu 750.000 E belohnt [5].

Die Aktualität des Problems wird besonders vor dem Hintergrund wechselnder Bedarfs- und Laststrukturen in öffentlichen Verteilnetzen deutlich. Es wurde nachgewiesen, dass diese wechselnden Strukturen vermehrt zu Kabelüberhitzungen und Alterungseffekten beitragen können [6].

Die aktuelle Forschung beschäftigt sich außerdem mit den konkreten Auswirkungen von Überhitzungseffekten [7, 8]. Das unterstreicht den akuten Bedarf an präventiven Lösungen weiter.

Der Netzausbau in Deutschland ist in den vergangenen Jahren maßgeblich dadurch geprägt, dass Übertragungskapazitäten durch die Vergrößerung von Kabelquerschnitten und dem Verlegen von Parallelleitungen erweitert werden. Zusätzlich werden vorhandene Freileitungsstrecken, politisch/gesellschaftlich bedingt, verkabelt. Die vorgestellte Erfindung kann durch eine optimierte Auslastung der Kabelstrecken den Neuausbaubedarf verringern. Dabei kann unter Umständen die ebenfalls massiv ausgebaute und somit bereits vorhandene Messtechnik genutzt werden [9].

Begründung und besondere Vorteile für Beispielsystemkategorien

Die Anwendung der vorgestellten Erfindung ist für alle elektrischen Systeme, besonders die in Tabelle 1 aufgeführten, zweckmäßig.

*Tabelle 1 Systemspezifische Vorteile einer Temperaturüberwachung*

| Elektrische Systeme | Systemspezifische Auswirkung durch Überhitzung | Zusätzliche systemspezifische Vorteile der Temperaturüberwachung |
|---|---|---|
| Energieübertragungsleitungen • <br>• Wechselspannungs-Kabel <br>• Wechselspannungs-Freileitung <br>• HGÜ-Kabel <br>• HGÜ-Freileitungen <br>• Kabelschienen <br>• Erdungssysteme u. Blitzableiter | • Degradierung der Isolationsschicht, insb. bei inhomogener Belastung [10] <br><br>• Selbstregulierung von Kabelstrecken kann temperaturabhängig versagen[11] | • Vorhandene Regelungen zur Bestimmung von Temperaturcharakteristiken können genutzt und erweitert werden[12] |
| Rotierende elek. Maschinen** <br>• Synchronmaschinen <br>• Asynchronmaschinen <br>• Kommutatormaschinen | • Verringerung der Lebensdauer[13, 14} <br><br>• Anstieg der Verlustenergie[13] <br>• Veränderung der Randbedingungen von thermischen Modellen[13, 15] • | • Zur optimierten Motorsteuerung besonders bei hoch magnetisierbaren Materialen[16, 17] <br>• Zur genaueren und verbesserten Reglung des Drehmomentes des Motors, besonders für Dämpfung und oszillierenden Betrieb [18-20] <br>• Verbesserte Identifikation elektrischer Parameter[21] |
| Ruhende elek. Maschinen. <br>• Transformatoren | • Veränderte magnetische Feldeigenschaften [22] <br>• Veränderung der Eigenschaften des Transformatorboards [23, 24] <br>• Verschlechterung der Isolation durch Blasenbildung[25] | • Verfahren zur Bewertung des Systemalters können verbessert werden (z.B. Furfural Gehaltsmessungen, FDS)[17, 26] |
| Elektrochem. Energiewandler* <br>• Brennstoffzellen | • Austrocknung und Degradation der Membran [27,28] <br>• Schnellere Alterung bei hohen Temperaturen, selbst im noch zulässigen Bereich bei PEMFCs bis zu 6-fach [27] | • Dehydrierte Membranen haben u.a. einen erhöhten elektrischen Widerstand [27, 28]. Eine Bewertung der Betriebstemperatur kann Rückschluss auf den Feuchtigkeitsgehalt der Membran geben. <br>•Über die Betriebstemperatur kann der elektrische Wirkungsgrad optimiert werden [29]. |

(fortgesetzt)

| Elektrische Systeme | Systemspezifische Auswirkung durch Überhitzung | Zusätzliche systemspezifische Vorteile der Temperaturüberwachung |
|---|---|---|
| Elektrische Energiespeicher*<br>• Batteriesysteme<br>• Kondensatoren<br>• Spulen | • Verringerung Lade- und Entladezyklen bei Überschreiten der zulässigen Betriebstemperatur um bis zu 60% [30] | • Der Ladezustand kann bei bekannten Batterieeigenschaften durch die Temperatur und Strommessung ermittelt werden (insb. "recovery capacity") [31, 32]<br>• Optimierung von dynamischen und temperaturabhängigen Lade-/ Entlademustern [33] |
| Lasten */**<br>• Ohmsche<br>• Induktive<br>• Kapazitive<br>• auch Doppelschichtkondensatoren<br>• Mischlasten | • Die Nutzungsdauer und Anzahl der Lade-/Entladezyklen ist bei z.B. "Supercaps" im thermischen Grenzbereich um den Faktor 10 kleiner als bei normalen Betriebstemperaturen [34]. | • Bestimmung von Lastcharakteristiken verbessern[35]<br>• Die tatsächliche Lebensdauer von z.B. zwischenkreisen kann regelmäßige Temperaturmessungen besser vorhergesagt werden [34].<br>• Über die Verschiebung der Resonanzstelle von Isolationsmaterialien kann auf die reale Alterung geschlossen werden [36]. |
| Sonstiges */**<br>• Netzfolgende/-bildende Wechselrichter | • Wechselrichter können thermisch inhomogen belastet sein, wenn die Belastung der einzelnen Schalter aufgrund des Schaltmusters nicht gleich ist [37, 38]. Inhomogene Erwärmungen reduzieren die Lebensdauer erheblich [39]. | • Verfahren zur Verlängerung der Lebenszeit von Mehrstufigen Wechselrichtern, wie z.B. durch "space vector modulation", können durch Anwendung dieser Erfindung sensorfrei werden [38]. |
| • Schutztechnik | • Die Degradation der Schmelzleiter bei Sicherungen ist Temperaturabhängig und wird im Grenzbereich beschleunigt (40). | • Bestehende Schutztechnik kann genutzt werden, um z.B. die Ladevorgänge im E-Mobilitätssektor festzustellen und thermisch zu bewerten. |
| Systeme können als *Zweitor oder als **Pseudo-Zweitor dargestellt werden | | |

Zulässige Anbindung der elektrischen Systeme

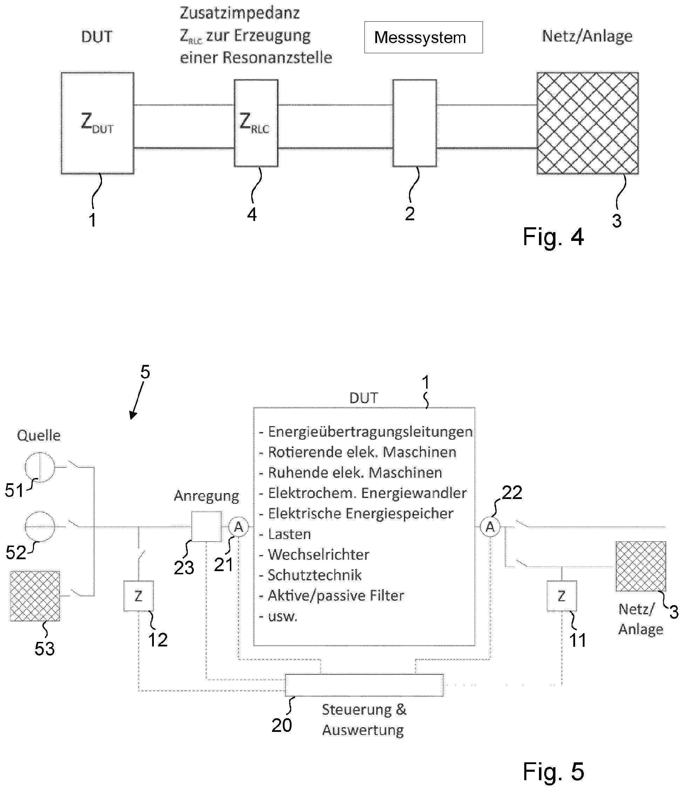

Die zu untersuchenden Systeme können einzeln in einem Teststand, in einem Microgrid oder netzparallel untersucht werden, siehe Figur 5. Vorteilhaft für die Umsetzung des Verfahrens ist es, das Systemverhalten zu isolieren, die Eigenschaften des Microgrids bzw. des Netzes vorab und hinreichend regelmäßig zu ermitteln und analytisch von der Systembewertung zu trennen. Dies kann z.B. durch vorgelagerte Messungen des entkoppelten Netzverknüpfungspunktes geschehen.

Die Figur 5 zeigt eine beispielhafte Schaltungsanordnung zur thermischen Überwachung eines elektrischen Systems 1. Am elektrischen System 1 ist eingangsseitig ein Stromsensor 21 und ausgangsseitig ein Stromsensor 22 angeschlossen. Mit dem Stromsensor 21 kann der Eingangsstrom des elektrischen Systems 1 erfasst werden, mit dem Stromsensor 22 der Ausgangsstrom. Zur Erzeugung einer elektrischen Anregung des elektrischen Systems 1 an einer oder mehreren Resonanzstellen ist eine Anregungssteuerung 23 vorhanden, die den Eingang des elektrischen Systems 1 mit einer oder mehreren Anregungsquellen 51, 52, 53 verbinden kann, z.B. einer Stromquelle 51, einer Spannungsquelle 52 oder einem elektrischen Netz, z.B. einem Mikrogrid 53. Das elektrische System 1 kann außerdem ausgangsseitig mit einem Netz oder einer Anlage 3 verbindbar sein. Je nach aufzunehmender Charakteristik sind Impedanzmesseinrichtungen entsprechend zu integrieren. Das auf diese Weise gebildete Messsystem 2 wird durch eine Steuereinheit 20 gesteuert.

Die Steuereinheit 20 kann zudem die Auswertung der Sensorsignale der Sensoren 21, 22 durchführen und hierdurch die thermische Kenngröße des elektrischen Systems 1 bestimmen.

Am Eingang des elektrischen Systems 1 kann zudem eine zuschaltbare Impedanz 12 angeschlossen sein. Am Ausgang des elektrischen Systems 1 kann zudem eine zuschaltbare Impedanz 11 angeschlossen sein. Durch die zuschaltbaren Impedanzen 11, 12 können zusätzliche Resonanzstellen erzeugt werden.

Die Erfindung eignet sich zur Lösung einer Vielzahl technischer Probleme:

a. Wie kann die Betriebstemperatur ohne den Einsatz von Temperatursensoren festgestellt werden?

b. Wie kann eine Steuer- und Kontrolleinheit aufgebaut sein, um die Signalverarbeitung, die Datenverarbeitung, die Kommunikation, die Auswertung und die Systemsteuerung zu gewährleisten?

c. Wie können orts- und systemspezifische Frequenzgrenzen zur Auswahl einer geeigneten und optimalen Anregungsfrequenz ermittelt werden?

d. Wie kann ein elektrisches System angeregt werden, sodass eine signifikante und messbare Strom- oder Spannungsharmonische mit der ermittelten Anregungsfrequenz in den Resonanzstellen eines Systems überlagert wird?

e. Wie können Referenzcharakteristiken für das temperaturabhängige Übertragungsverhalten, im Normalbereich und bei kritischen Temperaturen, für elektrische Systeme ortsspezifisch und allgemein beschrieben werden?

f. Mit welcher Leistung kann das System angeregt werden bzw. welche Amplitude muss die überlagerte Strom- bzw. Spannungsharmonische haben?

g. Wie kann eine adäquate Wiederholungsrate für die Durchführung der Systemkonditionierung und der Messung identifiziert werden.

h. Wie kann in einem System mit unzureichenden Resonanzstellen eine geeignete zusätzliche erzeugt werden?

i. Wie kann der Schirmstrom als zusätzliche Informationsquelle bei Energieübertragungskabeln ausgenutzt werden?

j. Wie kann das Verfahren in einem System zur Temperaturüberwachung mittels Resonanzstellenauswertung in Systemen mit und ohne Temperatursensoren eingesetzt werden?

k. Wie können Alterungscharakteristiken für die Übertragungsfunktion spezifischer Systeme entwickelt und beobachtet werden?

l. Wie können Fehlercharakteristiken entwickelt und beobachtet werden, die dann Grundlage für die Fehlerbewertung und das "active health monitoring" sein können?

m. Wie kann das Verfahren zur Identifikation von elektrischen Systemen und Systemstrukturen verwendet werden?

n. Wie kann der Betriebspunkt bzw. die Belastung eines elektrischen Systems mittels des Verfahrens bewertet werden?

o. Wie kann die Umgebungstemperatur von Kabeln ohne zusätzliche Temperatursensoren ermittelt und überwacht werden?

p. Wie kann die energetische Übertragungskapazität von Freileitungen und Kabeln erweitert werden?

Beispielhafte technische Lösungen:

Problem a. Verfahrensablauf

Die Verbringung von Stromsensoren ist aufgrund der Positionierung am Systemein- und -ausgang, entgegen einer Verteilung der Temperatursensoren entlang des Systems, einfacher. Die Erfindung ermöglicht es, Temperatursensoren ohne wesentlichen Informationsverlust durch Stromsensoren auszutauschen.

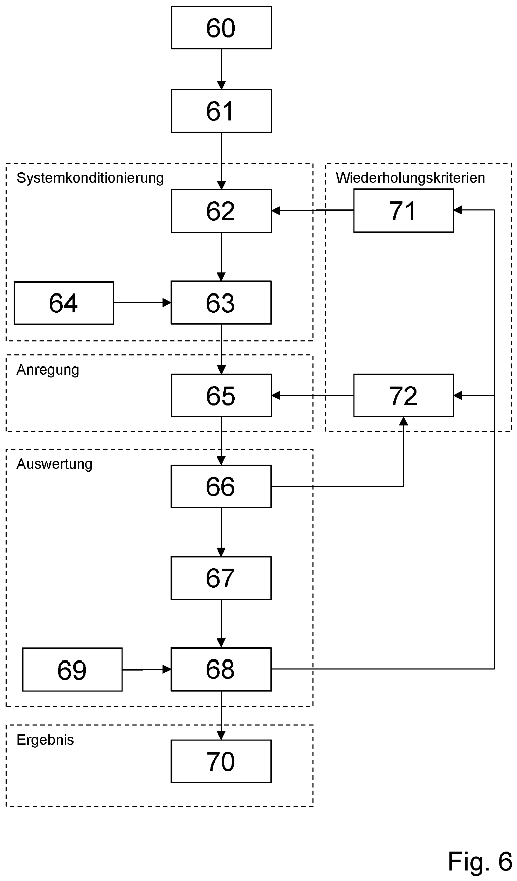

Anhand der Figur 6 wird ein Verfahren vorgestellt, mit dem das umgesetzt werden kann. Dadurch ist es möglich, mittels einer Resonanzstellenauswertung einen Zusammenhang zwischen dem Betriebsstrom und der Betriebstemperatur herzustellen. Das Ablaufschema der Figur 6 beschreibt dieses Verfahren.

Der Prozess beginnt nach dem Start 60 mit einer initialen Systemkonditionierung 61, welche ausgewählte Systemparameter und Eigenschaften des Netzverknüpfungspunktes identifiziert und im Steuerungs-/Datenbanksystem abspeichert. Dazu zählen unter anderem die Bestimmung von Nichtlinearitäten, auszuschließende Frequenzbänder aufgrund einer Sekundärnutzung, wie z.B. "Powerlinecommunication", und besondere Eigenschaften der verwendeten Schutztechnik. Die Initialkonditionierung kann z.B. eine Prüfung darauf beinhalten, ob das erfindungsgemäße Verfahren mit dem elektrischen System überhaupt sinnvoll durchgeführt werden kann, bzw. ob gegebenenfalls zusätzliche Resonanzstellen erforderlich sind.

Das operative Verfahren startet bei der Systemkonditionierung im Block 62 für die Anregung und die Messsensorik. Um die temperaturbedingten Unterschiede im Übertragungsverhalten signifikant messen zu können, müssen zunächst die Resonanzstellen des Systems bzw. des Netzverknüpfungspunktes (bei verteilten Systemen) im Schritt 62 identifiziert werden. Dazu muss das System i.d.R. zusätzlich angeregt werden. Dies kann u.a. durch eines oder mehrere Anregungssysteme gemäß Figur 7 geschehen.

In einem Block 64 können die Frequenzbedingungen des elektrischen Systems überprüft werden, z.B. um sicherzustellen, dass die notwendigen Randbedingungen beachtet werden und vorhandene elektrische Signale, wie z.B. bei einer Powerline-Kommunikation, nicht gestört werden. Hieraufhin wird in einem Block 63 bestimmt, welche Anregungsfrequenzen für die Durchführung des Verfahrens sinnvoll und geeignet sind.

In einem darauffolgenden Abschnitt "Anregung" wird in einem Block 65 das elektrische System mit Anregungssignalen beaufschlagt, z.B. durch Überlagerung von Anregungsströmen am Eingang des elektrischen Systems.

In einem Abschnitt "Auswertung" erfolgt in einem Block 66 die Messung des Eingangsstroms und des Ausgangsstroms des elektrischen Systems. In einem darauffolgenden Block 67 wird eine Berechnung des Übertragungsverhaltens durchgeführt, d.h. es werden Ergebnisgrößen aus den zuvor gemessenen Größen bestimmt. Beispielsweise können analytische Transformationen der Messdaten durchgeführt werden.

In einem Block 69 wird ein systemabhängiger Grenzwert des Übertragungsverhaltens vorgegeben. In einem Block 68 wird dieser Grenzwert mit dem im Block 67 bestimmten Übertragungsverhalten, z.B. mit der ermittelten thermischen Kenngröße, verglichen.

Schließlich wird in einem Block 70 eine Abschätzung des thermalen Zustands des elektrischen Systems durchgeführt.

Das Verfahren kann regelmäßig wiederholt werden. Hierfür werden Wiederholungskriterien in den Blöcken 71 und 72 bestimmt. Beispielsweise kann im Block 71 eine adaptive Veränderung eines Abschlusswiderstands des elektrischen Systems durchgeführt werden. In einem Block 72 kann die Wiederholrate der Durchführung des Verfahrens in Abhängigkeit von der Betriebstemperatur des elektrischen Systems festgelegt werden.

In die Ermittlung der optimalen Anregungsfrequenz werden neben dem eigentlichen Systemspektrum und dem initialen Ausführungsbefehl noch systemspezifische voreingestellte Parameter aus einer Steuer- und Kontrolleinheit berücksichtigt. Diese Parameter umfassen unter anderem die zulässige obere und untere Frequenzgrenze. Die Erfassung ist im Folgenden in einem gesonderten technischen Problem zusammengefasst.

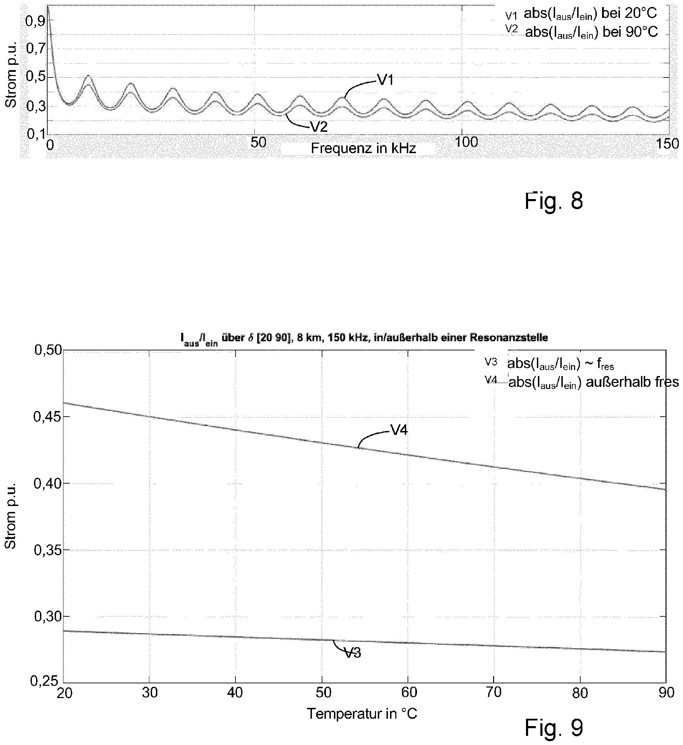

Beispielhaft beschreibt die Figur 8 das frequenzabhängige Übertragungsverhalten $I_{aus}/I_{ein}$ eines typischen Mittelspannungskabels mit einer Länge von 8 km und einem Netzabschlusswiderstand von 50 Ohm bei einer Temperatur von 20°C (Zeitverlauf V1) und einer Temperatur von 90° (Zeitverlauf V2). Zu erkennen ist, dass die Betriebstemperatur in Abhängigkeit der Frequenz unterschiedlich starke Auswirkungen auf das Übertragungsverhalten hat. Die konkrete Auswirkung ist neben der Frequenz besonders von der Leitungslänge, dem Leitungstyp, der Verlegeart, den Eigenschaften des Netzverknüpfungspunktes und ggf. vorhandenen Filtern und Betriebsmitteln abhängig. In diesem Fall variiert der Unterschied zwischen 0 und 6 Prozent, andere Netztypen können Unterschiede von 0 bis weit über 20 Prozent abbilden.

Deutlich wird, dass die Überlagerung der Stromharmonischen am Leitungsanfang eine Frequenz haben sollte, die nahe einer Resonanzstelle des Systems liegt, um deutliche Unterschiede im Übertragungsverhalten feststellen zu können. Das temperaturvariante Beispiel gemäß Figur 9 verdeutlicht die Notwendigkeit für die Auswertung, eine Resonanzstelle zu finden und das Übertragungsverhalten in dieser Stelle zu erfassen, noch weiter. Während sich das Übertragungsverhalten einer beliebigen Frequenz um nur ca. 1 Prozent ändert (Zeitverlauf V3), weist das Stromverhältnis in einem Resonanzpunkt, hier in der ersten Resonanzstelle bei ca. 10 kHz, eine relative Änderung von über 6 Prozent auf (Zeitverlauf V4). Außerdem vergrößert sich der Signal-Rausch-Abstand, was zusammen mit größeren Veränderungen in der Signalamplitude einen präziseren Rückschluss auf die Betriebstemperatur zulässt und die Anforderungen an die Stromsensoren verringert.

Nachdem ein optimales Frequenzband gefunden und angeregt wurde, können die Ein- und Ausgangsströme des DUTs zeitsynchronisiert gemessen und das Übertragungsverhalten unter Berücksichtigung der Netzverknüpfungsparameter berechnet werden. Für die Synchronisation können z.B. "handshake"- Verfahren genutzt werden [41]. Dafür müssen die gemessenen Ströme durch ein geeignetes Verfahren analysiert und interpretiert werden. Zum Beispiel durch Fourier-Analysen, Wavelets, selbstlernende Verfahren oder Multiparameteranalysen lassen sich die Ergebnisse auswerten und mit vordefinierten oder dynamisch ermittelten Grenzwerten vergleichen. Die Festlegung eines Grenzwertes ist nicht Bestandteil dieses Problems und wird an anderer Stelle beschrieben. Dieser Vergleich lässt einen Rückschluss auf den thermischen Zustand des DUT zu.

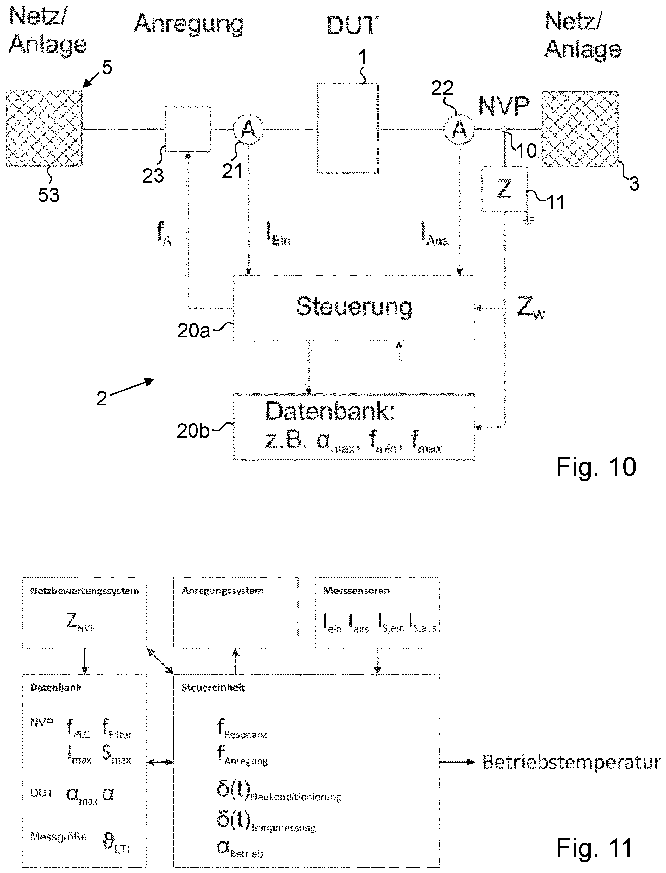

Die Figur 10 zeigt einen schematischen Messaufbau zur thermischen Bewertung eines elektrischen Systems. Der Aufbau gemäß Figur 10 entspricht weitgehend dem Aufbau gemäß Figur 5, wobei die Steuereinheit 2 hier detaillierter mit einer Komponente Steuerung 20a und einer Datenbank 20b dargestellt ist.

Da die Betriebstemperatur inhärent keine statische Größe ist, sondern sich belastungs- und umgebungsabhängig ändert, sollte das System das vorgestellte Procedere wiederholen. Ebenso können sich die elektrischen Eigenschaften am Netzverknüpfungspunkt, durch z.B. eine neue Netztopologie, verändern und somit Auswirkungen auf die Resonanzstellen haben. Die Wiederholungsraten sind Teil eines weiteren Untersuchungspunktes.

Mehrphasige Systeme müssen anwendungsspezifisch unterschiedlich ausgewertet werden. Sollen z.B. Maximalbelastungen oder Fehler untersucht werden, müssen die Phasen einzeln betrachtet werden, da es aufgrund von asynchronen Belastungen zu phasenindividuellen Überlasten, z.B. an einzelnen Betriebsmitteln, kommen kann [42]. Geht es jedoch darum charakteristische Merkmale zu identifizieren, ist es sinnvoll die Bewertung des symmetrischen Komponentenmodells durchzuführen [43].

Problem b. Steuereinheit

Die Steuereinheit ist integraler Bestandteil des Aufbaus und der Umsetzung des Verfahrens zum Anspruch 1. Sie ist Kernstück der Hardware und ist mit den Stromsensoren am Ein- und Ausgang, ggf. den Stromsensoren an den Erdungspunkten, dem Anregungssystem, ggf. dem System zur Netzanalyse und der Datenbank verbunden.

Die konkrete Ausführung ist systemabhängig. Mindestens müssen jedoch die Informationsströme gemäß Figur 6 verarbeitet, die Anregungs- und Netzbewertungssysteme angebunden und die notwendigen Berechnungen und Vergleiche durchgeführt werden. Die Steuereinheit gibt nach einer internen Auswahl die Parameter für die Systemanregung, z.B. Amplitude und Frequenz, vor und initiiert diese. Die Steuereinheit kennt dabei unzulässige Anregungsbereiche und wählt optimale Parameter aus. Die Steuereinheit empfängt Messdaten, interpretiert diese und vergleicht sie mit systemspezifischen Referenzdaten. Außerdem werden situationsabhängig Messungen und Systemkonditionierungen wiederholt. Dabei wird außerdem eine Systemzeit zur Synchronisation aller Messgrößen, Datenströme und Ausführungsbefehle definiert. Diese wird allen, insbesondere den verteilten, Systemkomponenten vorgegeben.

Figur 11 veranschaulicht die Einbindung der Steuereinheit in den Gesamtaufbau. Vorteilhaft ist insbesondere die Verwendung zur Messung rein elektrischer Parameter und die daraus hervorgehende Ableitung von thermischen Größen.

Problem c. Frequenzauswahl

Um einen Frequenzbereich hinsichtlich seiner Eignung zu bewerten, sollte der betrachtete Netzverknüpfungspunkt (NVP) für diese Frequenz folgende Eigenschaften haben:

i. Er sollte für möglichst lange, mindestens jedoch für den Zeitraum eines Messzyklusses und in hinreichender Näherung, linear und zeitinvariant sein.

ii. Die bestehende Oberschwingungsbelastung sollte im Vergleich zur Amplitude der geplanten Überlagerung im Anregungsbereich niedrig sein. Mindestens muss diese jedoch konstant im Sinne eines LTI-Systems sein und gemessen werden können. Besonders ist auf die Resonanzstellen von (aktiven) Filtern zu achten.

iii. Die überlagerte(n) Harmonische(n) erfährt in der Regel eine Dämpfung bis zum Leitungsende. Die Signalamplitude am Leitungsende muss immer noch signifikant und damit messbar sein.

iv. Die Anregungsfrequenz sollte oberhalb des regulierten Bereichs für Oberschwingungen liegen, d.h. größer als 2000 bzw. 9000 Hz sein. Mindestens sollten jedoch der THD und weitere Grenzwerte am Netzverknüpfungspunkt nicht überschritten werden.

v. Sollten Installationen zur "powerline communication" vorhanden sein, sollte die Anregungsfrequenz unterhalb des niedrigsten Kommunikationsbandes liegen. Mindestens sollte die Überlagerung jedoch erfasst und an einer Schnittstelle übergeben werden.

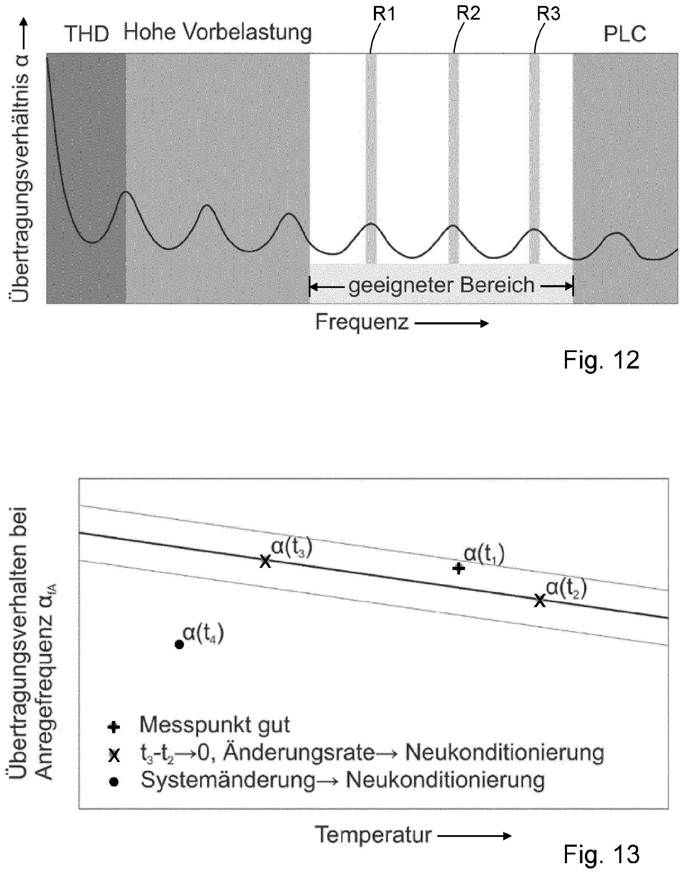

Eine grafische Darstellung der Ausschlusskriterien für die geeigneten und optimalen Anregungsfrequenzen ist in Figur 12 einzusehen. Hier können drei geeignete Resonanzstellen R1, R2, R3 gefunden werden.

Dabei wird zunächst die vorhandene Oberschwingungsbelastung am NVP gemessen. Danach wird das System über einen definierten Zeitraum periodisch angeregt, um die Frequenz der zeitlichen Veränderungen festzustellen. Insbesondere eignet sich hierfür, aufgrund der kurzen Belastungsdauer, eine RPWM-Breitbandanregung. Außerdem kann mittels eines "Frequenzsweeps" festgestellt werden, ob nichtlineare oder zeitvariante Eigenschaften im Netz signifikant vorhanden sind, indem einzelne Frequenzen über mehrere Basisperioden angeregt und ausgewertet werden. Sollten die Ergebnisse variieren, müssen andere Anregungsfrequenzen ausgewählt werden.

Um darüber hinaus die optimale Frequenz auszuwählen, kann die temperaturabhängig volatilste Frequenz bestimmt werden, also die Optimierung von Gleichung V durchgeführt werden. Sollte dies nicht möglich sein, ist die Auswahl des statischen Maximalwertes von a eine gute Näherung. Die Frequenzen mit den maximalen temperaturabhängigen Unterschieden im Übertragungsverhalten sollten ausgewählt werden.

Für die Auswahl der Resonanzstellen kann z.B. folgender Ablauf durchgeführt werden:
Die Resonanzstellen eines Systems haben die Frequenzen $f_{Resonanz,i}$.

F ist die Menge aller auftretenden Resonanzfrequenzen im System, mit $|F| >= 1$.

Für alle $f_{Resonanz} \in F$, wird

$$\Delta |Z|( f_{Resonanz}, T_1, T_2) := |Z|( f_{Resonanz}, T_1) - |Z|( f_{Resonanz}, T_2)$$

maximal für beliebige $T_1$ und $T_2$.

Aus allen Elementen von F können optimale Frequenzbereiche abgeleitet werden.

Für jede $f_{Resonanz} \in F$ wird jeweils ein optimaler Frequenzbereich $F_{optimal,i}$ wie folgt definiert:

$$F_{optimal,i} = [f_{Resonanz} - \delta f \; ; \; f_{Resonanz} + \delta f], \text{ mit } \delta f = \delta f(|Z|, f_{Resonanz}, \varepsilon, r),$$

wobei $\varepsilon$^=Absolute Messabweichung, r^=Formfaktor Anregungsverfahren, i=|F| gilt.

Problem d. Anregungsverfahren

Die Anregung bzw. die Überlagerung der Stromharmonischen mit der Anregungsfrequenz kann auf unterschiedliche Weisen erfolgen. Besonders eignet es sich, bereits vorhandene Betriebsmittel, wie z.B. ansteuerbare und mehrstufige Wechselrichter, zu verwenden oder vorhandene konstante Oberschwingungen zu verwenden. Figur 7 zeigt eine Auswahl möglicher Anregungssysteme und Anregungssignale.

Die Figur 7 gibt einen Überblick über vorteilhafte Anregungssysteme und die dadurch erzeugbaren Anregungssignale. Beispielsweise kann ein Anregungssystem zum Anregen des elektrischen Systems an einer oder mehreren Resonanzstellen eine Stromquelle oder Spannungsquelle A beinhalten. Ein weiteres mögliches Anregungssystem kann ein steuerbarer DC/AC-Wandler B sein. Ein weiteres mögliches Anregungssystem C kann eine hinzuschaltbare Impedanz Z sein. Ein weiteres mögliches Anregungssystem D kann ein hinzuschaltbarer Speicher sein, z.B. ein Kondensator. Ein weitere Möglichkeit besteht darin rapide wechselnde Systemzustände auszunutzen, um eine Systemanregung zu realisieren. Beispielhaft ist ein Anregungssystem durch den Transformator E gezeigt.

Wechselrichter können zusätzlich zu ihrer Funktion, Gleich- in Wechselgrößen durch PWM umzuwandeln, auch ein zusätzliches Signal überlagern. In diesem Fall zeichnet sich das Ausgangssignal durch die Anregung eines Frequenzbandes aus, dessen Amplituden einer Gaußverteilung entsprechen. Alternativ kann auch eine parallel geschaltete Stromquelle verwendet werden. Dies ist besonders dann sinnvoll, wenn die präzise Anregung einzelner Frequenzen oder schmaler Frequenzbänder notwendig ist. Eine weitere Alternative bildet eine hochfrequente getaktete Lastzuschaltung, siehe EP2385381. Hiermit können durch unterschiedliche Pulsmuster alle oder gruppierte Frequenzbänder angeregt werden. Insofern der Lastwiderstand richtig dimensioniert und der Leistungsschalter für die Anregungsfrequenz geeignet ist, lässt sich die gewünschte Oberschwingungsbelastung realisieren.

Problem e. Referenzcharakteristik

Zur Bestimmung des temperaturabhängigen Einflusses auf bestimmte Frequenzbereiche des Übertragungsverhaltens können theoretische Modelle für das jeweilige elektrische System entwickelt oder leitungsspezifische Messungen durchgeführt werden.

Beispielsweise können die Messungen für gängige Systeme im Voraus mit einem variablen Lastwiderstand und ggf. einer Einheitslänge durchgeführt werden. Dabei müssen Temperatursensoren die Betriebstemperatur gesondert erfassen. Das System muss dann für jeden Temperaturpunkt bei jedem Abschlusswiderstand bewertet werden, um so jeweils eine frequenzabhängige Übertragungscharakteristik zu erstellen. Dieser Prozess muss für jeden Systemtyp jedoch nur einmalig durchgeführt werden.

Theoretische Modelle können bei Kenntnis der Systemparameter, der Verlege- bzw. Installationsart usw. schneller die entsprechende Charakteristik beschreiben. Dazu können gängige Leitungsmodelle wie z.B. das verteilte Parametermodell einen Beitrag leisten. Vorteilhaft ist es, wenn dabei frequenzabhängige Effekte wie "Skin oder Proximity-Effekt" berücksichtigt werden.

Für die Umsetzung der Messungen und die Aufnahme der Übertragungscharakteristika können systemabhängig bekannte und standardisierte Verfahren verwendet werden [44].

Problem f. Anregungsleistung

Damit die Übertragungscharakteristik des zu untersuchenden elektrischen Systems ermittelt werden kann, muss u.a. der Ausgangsstrom gemessen werden. Da die Dämpfungseigenschaften des Systems frequenzabhängig sind, können diese von der gem. Beispiel 5 bestimmten Charakteristik bei den gem. Beispiel 3 bestimmen Frequenzbereichen herangezogen werden. Diese Dämpfungen und die Genauigkeit der Stromsensoren bestimmen somit die Anregungsleistung am Systemeingang. Sollen auch Schirmströme gem. Beispiel 10 betrachtet werden, können zusätzlich die induktive Kopplung und die Schirmimpedanz als Minderungsfaktoren berücksichtigt werden. Es gilt:

$$min(|I_{ein}|), mit\ I_{aus} > \zeta\ (Sonsorgenauigkeit\ bei\ f_{Anregung})\text{VI}$$

Die Anregungsleistung verteilt sich verfahrensabhängig auf das gesamte angeregte Spektrum. Wesentlich ist die Amplitude des spezifischen Auswertungsbereichs.

Eine Einschätzung der benötigten Anregungsleistung muss somit unter Berücksichtigung der Systemdämpfung der anzuregenden Harmonischen und der Anregungsmethode stattfinden. Während Approximationen für den Leistungsbereich als Vorauslegung bei der Geräteauswahl und bei der initialen Systemkonditionierung durchgeführt werden können, müssen die konkreten Signalamplituden dynamisch bei der Verfahrensdurchführung ermittelt werden.

Problem g. Wiederholungsrate der Konditionierung

Obwohl Dauermessungen die schnellste Reaktionszeit bei Veränderungen, sowohl des Netzes als auch der Betriebstemperatur, garantieren, ist dies nicht immer zweckmäßig. Durch den permanenten Betrieb würden anregungsverfahrenabhängig dauerhaft Verluste entstehen und die Oberschwingungsbelastung wäre als permanentes Phänomen neu zu bewerten.

Die geeignete Wiederholungsrate für die Systemkonditionierung hängt von der Änderungsrate von $Z_{NVP}$, also der Netztopologie, am Netzverknüpfungspunkt ab. Je häufiger und je signifikanter Änderungen auftreten, desto frequenter muss das Messsystem neu konditioniert werden. Dabei fließen sowohl Erfahrungswerte am NVP als auch Prognoseabweichungen mit ein. Sollte sich also das Übertragungsverhalten so verändern, dass kein Punkt mehr auf der temperaturabhängigen Funktion zugeordnet werden kann, muss eine Neukalibrierung stattfinden, siehe Figur 13.

Die Änderungsrate des Übertragungsverhaltens muss ebenfalls einer plausiblen thermischen Ableitung entsprechen. Sollte diese einen Grenzwert überschreiten, muss durch eine Neukonditionierung ein physischer Leitungsfehler ausgeschlossen werden.

$$\left|\frac{I_{aus}}{I_{ein}}\right| = \alpha \;\neq c \cdot f(\alpha(\theta)), mit\; c\; Sensorkorreturfaktor\; \text{VII}$$

$$\frac{d\left|\frac{I_{aus}}{I_{ein}}\right|}{dt} \sim \frac{dT}{dt} \leq \delta\;, mit\; \delta\;\; als\; maximale\; thermische\; \text{Änderung}\; \text{VIII}$$

Wiederholungsrate der Temperaturmessung

Die geeignete Wiederholungsrate für die Überlagerung der Stromharmonischen zur Temperaturmessung hängt von der aktuellen Betriebstemperatur ab. Je näher das aktuelle Übertragungsverhalten $\left|\frac{I_{aus}}{I_{ein}}\right|$ an der Grenze $a_{max}$ liegt, desto frequenter sollte gemessen werden, um Überschreitungen zu vermeiden. Die Intervalle hängen außerdem vom Leitungstyp und von der thermischen Ableitfähigkeit ab. Die Messintervalle

$$\Delta t_m(\theta, I_{50Hz}) \text{IX}$$

sind abhängig von der Temperatur, hier also von dem abgeleiteten Übertragungsverhalten, und dem absoluten Eingangsstrom. Die Berechnung kann auf thermischen Kabelmodellen beruhen. Die Referenzwerte werden in den charakteristischen Parametern der Kabeltypen festgehalten

Problem h. Zusätzliche Resonanzstelle

Das Patent EP3010149B1 beschreibt ein allgemeines Verfahren, in dem Resonanzstellen durch eine Systemerweiterung künstlich herbeigeführt werden. Ein solches Verfahren kann für die Realisierung der Erfindung eingesetzt werden. Um künstliche Resonanzstellen sinnvoll für die thermische Auswertung zu erzeugen, müssen die sich ändernden Rahmenbedingungen, wie z.B. die veränderliche Impedanz am Netzverknüpfungspunkt (NVP), alterungs- und fehlerbedingte Degradationen und thermische Effekte auf das Übertragungsverhalten berücksichtigt werden. Die Systemerweiterung kann mit Temperatursensoren ausgestattet werden, um bei der dynamischen Anpassung der Resonanzfrequenz neben den Eigenschaften des NVP auch die thermische Änderung der Eigenen Impedanz berücksichtigen zu können.

Gemäß Figur 4 wird das zu untersuchende elektrische System 1 mit einer Zusatzimpedanz 4 verbunden, um eine künstliche Resonanzstelle zu erzeugen. Hieran wird dann ein Messsystem 2 angeschlossen, an das wiederum ein Netz oder eine Anlage 3 angeschlossen sein kann.

Problem i. Schirmstrom

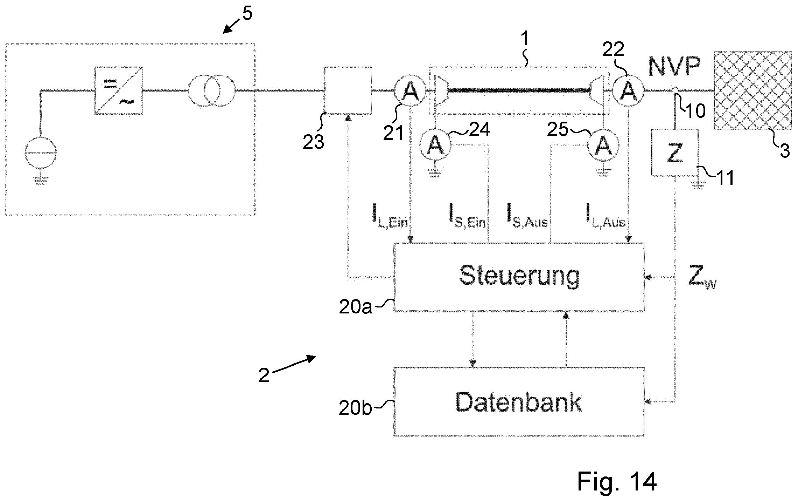

Der Schirmstrom und seine Änderungen können zusätzliche Parameter für die Bewertung von Kabeln sein. Dazu kann der Aufbau gemäß Figur 14 zugrunde gelegt werden.

Der Aufbau gemäß Figur 14 entspricht vom Grundsatz her dem Aufbau gemäß Figur 5, wobei als elektrisches System 1 eine geerdete elektrische Energieübertragungsleitung zugrunde gelegt ist, die als geschirmte Leitung ausgebildet ist und bei der die Schirmströme mittels weiterer Stromsensoren 24, 25 an allen Erdungspunkten gemessen werden. Die Schirmströme gehen in die Auswertung mit ein, d.h. die Steuereinheit 2 erfasst diese Schirmströme und berücksichtigt diese in der Auswertung und späterer Steuerung der Belastung des elektrischen Systems 1.

Prinzipiell wird das Verfahren gem. Anspruch 1 genutzt, mit der Abweichung, dass zusätzlich die Schirmströme an allen Erdungspunkten gemessen werden und die Übertragungscharakteristik des Schirms festgestellt werden muss. Außerdem muss eine zusätzliche Regelungslogik berücksichtigt werden. Der Schirmstrom wird im Wesentlichen durch die induktive Kopplung mit dem Leiterstrom und die thermisch bedingte Impedanzveränderung des Schirms beeinflusst. Eine Änderung des Leiterstroms bewirkt eine unmittelbare Änderung des Schirmstroms. Steigt die Leitertemperatur an, ändert sich das Übertragungsverhalten des Leiters und somit ebenfalls unmittelbar der Schirmstrom. Zusätzlich tritt eine zweite verzögerte Änderung des Schirmstromes durch die thermisch bedingte Änderung des Übertragungsverhaltens des Schirmes auf. Diese Zeitverzögerung ist ein Indikator für die Erwärmung des Schirmes und wird als neue charakteristische Eigenschaft herausgestellt. Damit können u.a. Rückschlüsse auf die Umgebungstemperatur gemacht oder Materialfehler im Schirm detektiert werden.

Das Verfahren kann wie folgt ablaufen:

| Schritt 1 | Initialzustand | • $T_{Schirm}$, $T_{Leiter}$, $T_{Umgebung}$ <br> • $\alpha_{Schirm}$, $\alpha_{Leiter}$, $I_{Schirm}$, $I_{Leiter}$ |
|---|---|---|
| Schritt 2 | $T_{Leiter}$->$T'_{Leiter}$ | • Anstieg der Leitertemperatur <br> • $T_{Leiter} < T'_{Leiter}$, z.B. durch einen Fehler oder einen Anstieg von $I_{Leiter}$ |
| Schritt 3 | $\alpha_{Leiter}$-> $\alpha'_{Leiter}$ <br> $I_{Schirm}$-> $I'_{Schirm}$ | • zeitgleiche Änderung des Übertragungsverhaltens des Leiters <br> • unmitellbare Änderung des Schirmstroms |
| Schritt 4 | $\alpha_{Leiter}$-> $\alpha'_{Leiter}$ | • Verzögerte und thermisch bedingte Änderung des Übertragungsverhaltens des Schirms <br> • Sekundäre Änderung des Schirmstromes |

Problem j. Temperaturüberwachung

Ein Überhitzungsschutz bzw. ein Temperatur-Monitoring für elektrische Systeme kann mittels des Verfahrens gem. Anspruch 1 umgesetzt werden.

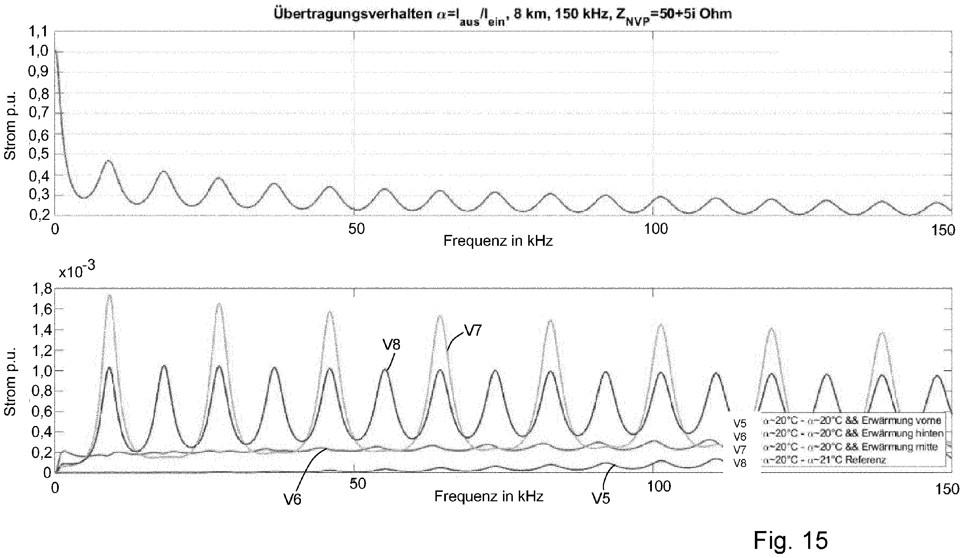

Hierfür werden systemspezifische Grenzwerte für das Übertragungsverhalten im Vorhinein festgelegt und ggf. regelmäßig überprüft. Nachdem die Systemeigenschaften analytisch isoliert worden sind, kann aufgrund der Übertragungscharakteristik ein Rückschluss auf die Betriebstemperatur folgen. Die Übertragungscharakteristik kann nicht nur für die Bestimmung der homogenen Erwärmung sondern auch für die Bestimmung von inhomogenen "hotspots" herangezogen werden. In Figur 15 ist die Übertragungscharakteristik einer 20°C warmen und 8 km langen Energieübertragungsleitung dargestellt. Die Übertragungscharakteristik variiert mit dem Ort der Erwärmung, am Kabelanfang, -ende und in der Mitte. Sie unterscheidet sich außerdem deutlich von einer homogenen Erwärmung. Sollen inhomogene Erwärmungen erfasst werden, müssen die Signalamplituden auch für diese sekundäre Auswertung hinreichend hoch sein. Da dieses Verfahren ohne Temperatursensoren auskommt, eignet es sich besonders, wenn eine Überwachung sinnvoll oder notwendig ist, die Nachrüstung jedoch sehr aufwendig oder unwirtschaftlich wäre.

In Systemen mit vorhandener Temperaturüberwachung kann das Verfahren einen zusätzlichen temperatursensorunabhängigen Kontrollparameter liefern und somit die Ausfallsicherheit und ggf. die Genauigkeit verbessern. Für Systeme mit besonderen Anforderungen an die Ausfallsicherheit, z.B. in Flugzeugbordnetzen oder in Atomkraftwerken, ist es sinnvoll, dass hierfür eigene systemspezifische Modelle entwickelt werden. Wenn z.B. das zugrunde liegende verteilte Parametermodell um die Temperaturinformationen an den jeweiligen Leitungsabschnitten erweitert wird, ist es möglich, eine sehr genaue Übertragungscharakteristik aufzustellen. Je nach Leitungsabschnitt und Frequenzbereich können sich Erwärmungen in unterschiedlichen Abschnitten unterschiedlich auf die Übertragungseigenschaft auswirken. Wenn zusätzlich das Verfahren gem. Beispiel 19 angewendet wird, kann dieses Lokalisationskriterium mit dem beschriebenen Überhitzungsschutzverfahren korreliert werden und somit die Fehlerortsbestimmung noch genauer machen.

## Problem k. Alterungscharakteristik

Die Eigenschaften von elektrischen Systemen verändern sich durch Alterung und durch extreme Betriebszustände, wie z.B. transiente Spannungen, das Überschreiten der zulässigen Stromstärke oder extrem tiefe bzw. hohe Umgebungstemperaturen. Damit einher geht eine erhöhte Fehler- und Ausfallhäufigkeit des Systems. Um die alterungsbedingte Veränderung der Übertragungscharakteristik feststellen zu können, eignet es sich besonders, die Messungen am leerlaufenden System durchzuführen. So hat der NVP keinen Einfluss und die Messkomplexität für die Referenz reduziert sich um eine Dimension. Alternativ können heuristische Ansätze verfolgt werden, bei denen Übertragungscharakteristiken bei konkreten Belastungsszenarien und unter eindeutigen Rahmenbedingungen festgestellt werden und deren Veränderungen einen Rückschluss auf die Systemalterung geben. Insofern vorausgesetzt wird, dass die Veränderungen der Übertragungscharakteristik durch Alterung und nicht durch Systemfehler bedingt ist, verändern sich vor allem die leicht oxidierbaren, physisch belasteten und ggf. anderweitig reaktionsfreudigen Komponenten und dadurch deren Systemparameter, wie z.B. der Kapazitätsbelag. Infolgedessen wird auch das Übertragungsverhalten beeinflusst.

Durch die neu aufgenommene Leerlaufcharakteristik kann z.B. durch die Anwendung der ABCD Übertragungsparameter die Eigenschaften des Netzverknüpfungspunktes analytisch berechnet werden. Dadurch kann bei konstanten Netzeigenschaften das neue Übertragungsverhalten im laufenden Betrieb ohne Einfluss des NVP bewertet werden. Es ist bekannt, dass die Temperatur den wesentlichsten Einfluss auf die Alterung von Leitungen hat [45]. Die Erkenntnisse können durch statistische Erhebungen dieses Verfahrens quantifiziert werden.

Zur messtechnischen Bestimmung und Validierung der altersbedingten Deterioration müssen alterungsbegründende Effekte definiert und deren Auswirkungen messtechnisch erfasst werden. Dazu zählen u.a. grenzwertige Temperaturen, Temperaturgradienten, Oberschwingungs-belastungen, hohe Ströme, hohe Stromgradienten, Überspannungen ohne Durchschläge oder Teilentladungen. Außerdem können durch konstante Messungen Referenzdaten und die gleichzeitige Beschreibung der Betriebspunkte aggregiert werden. Durch die Auswertung diverser Datensätze lassen sich dann statistische Zusammenhänge zwischen dem alterungsbedingten Zustand, hier in Form des Übertragungsverhaltens, und dessen betriebs- und zeitbedingten Änderungen ermitteln. Sowohl die Auswahl der relevanten Datenpunkte also auch die Auswertung selbst können durch selbstlernende Verfahren optimiert werden.

## Problem l. Fehlercharakteristik

Aufgrund des hier festgestellten Zusammenhangs zwischen dem Übertragungsverhalten des spektralen Betriebsstromes und der Betriebstemperatur kann ein Gütekriterium für ein intaktes System entwickelt werden. Dieses Kriterium wird durch die komplexe Spektralfunktion $\alpha(f, Z_w, Kabeltyp, Kabellänge)$ ausgedrückt. Diese ist abhängig von Netzanschluss- und Systemparametern.

Anhand der Abweichung des aktuellen Übertragungsverhaltens in vordefinierten Rahmenbedingungen lassen sich Aussagen über den Grad der Beschädigung treffen. Mit dieser Methodik kann das hier vorgestellte Verfahren als "Health Monitoring" von Systemen verwendet werden. Dabei zeichnen sich Beschädigungen und Fehlerereignisse durch folgenden Zusammenhang aus. Insofern der absolute Strom geringer als der vordefinierte maximale Strom ist und das Betriebsverhalten gleichzeitig auf ein Übertragungsverhalten hindeutet, das einen zu hohen Strom impliziert, ist von einem Fehler auszugehen.

$$I_{ein} < I_{max} \; und \; \frac{I_{aus}\left(f_{Anregung}, \theta_{Betriebszustand}\right)}{I_{ein}\left(f_{Anregung}\, \theta_{Betriebszustand}\right)} < \; \alpha_{max}X$$

Die Energieübertragung kann solange aufrechterhalten bzw. wiederaufgenommen werden, solange $\alpha$ nicht überschritten wird. Eine dynamische Abregelung kann sinnvoll sein.

## Problem m. Systemidentifikation

Es gibt viele aktuelle Vorhaben, unbekannte Systeme, Netze und Netzstrukturen anhand ihrer elektrischen Eigenschaften oder anhand von Fehlerereignissen bzw. Topologieänderungen zu identifizieren [46-48]. Die Erweiterung dieser und weiterer Verfahren um die hier vorgestellte Temperaturabhängigkeit des resistiven Anteils, stellt ein Alleinstellungsmerkmal für eine thermisch variante Systemidentifikation mittels Resonanzstellenauswertung dar. Dazu wird das Verfahren gem. Anspruch 1 bei einem elektrischen System mit bekannter Temperaturcharakteristik oder verbauten Temperatursensoren angewendet. Kommt es zu einer Veränderung der Charakteristik durch ein Fehlerereignis bzw. durch eine Topologieänderung, verändert sich nicht nur die Impedanzkurve, sondern zusätzlich die thermisch zulässigen Bereiche der Übertragungscharakteristik. Die Überlagerung dieser Informationen ermöglicht eine präzisere Identifikation und ggf. Lokalisation des Fehlers. Neue Topologien können durch system- bzw. netzverknüpfungspunktspezifische Erwartungswerte durch selbstlernende Verfahren erfasst und zugeordnet werden.

Problem n. Betriebspunkt und Belastung

Die Eigenschaften elektrischer Systeme variieren für unterschiedliche Last- und Betriebspunkte [49]. Diese Erfindung umfasst, dass Unterschiede in den Resonanzstellen besonders geeignet festzustellen sind und dass eine Überlagerung des thermischen Einflusses die Bestimmung des Last- bzw. Betriebspunktes verbessert. Die elektrischen Charakteristiken können durch ein um Temperatursensoren erweitertes Verfahren gem. Anspruch 1 festgestellt werden. Die Belastung bzw. der Betriebspunkt korreliert mit den Strom-Wärme-Verlusten des Systems. Wenn Systeme die Betriebspunkte oder die Lasten wechseln, ergibt sich eine instantane Änderung der elektrischen Eigenschaften, insbesondere in den Resonanzstellen, und eine weitere verzögerte, thermisch bedingte Veränderung. Die Überlagerung dieser Informationen führt zum einen zu einer verbesserten Identifikation der Betriebspunkte und zum andern zu einer Erwartungshaltung der Erwärmung intakter Systeme. Intelligente und selbstlernende Verfahren können aus diesen Daten Prognosen entwickeln und so z.B. vorhandene Regelungssysteme oder Identifikationsverfahren verbessern.

Problem o. Umgebungstemperatur

Um die Umgebungstemperatur ohne zusätzliche Temperatursensoren festzustellen, kann das Verfahren gem. Anspruch 1, erweitert um das Beispiel 10 und ggf. das Beispiel 1, genutzt werden. Sobald sich ein kontanter Zustand einstellt, kann ein thermisches Model mit den vorherrschenden stationären Zustandsgrößen gebildet werden. Der stationäre Zustand ist dadurch gekennzeichnet, dass die thermische Energie, hervorgerufen durch den Leiterstrom und den induktiv bedingten Schirmstrom, an die Umgebung abgeführt wird und sich die Ströme, welche den thermisch variablen Übertragungscharakteristiken folgen, nicht ändern. Wenn der Leiterstrom weiterhin konstant ist, sich die Übertragungscharakteristik jedoch ändert, kann dies entweder aufgrund eines Fehlerfalls, von Alterungserscheinungen oder durch eine Änderung der Umgebungstemperatur geschehen. Die Unterscheidung muss aufgrund von aggregierten Datenmodellen erfolgen, wobei Fehlerfälle rapide Änderungen, Alterungserscheinungen konstante und uniforme Änderungen und Umgebungstemperaturänderungen vorhersehbare und modellierbare Änderungen des Übertragungsverhaltens des Systems verursachen. Zugrundeliegende thermische Modelle können durch initiale Daten zur Bodenbeschaffenheit optimiert werden. Durch die Beobachtung vieler Veränderungsvorgänge ist es plausibel, auch Veränderungen in der Bodenbeschaffenheit, wie z.B. das Austrocknen oder ein Absacken, feststellen zu können.

Problem p. Übertragungskapazität

Die energetische Übertragungskapazität von Kabeln ist durch einen zulässigen maximalen Strom beschrieben, der aufgrund von thermischen Modellen eine zulässige Dauerbelastung garantiert, ohne dass es zu thermischen Beschädigungen kommt. Der zulässige Maximalstrom ist somit inhärent ein limitierender Faktor für die Energieübertragung. Hier wird das Verfahren gem. Anspruch 1 angewendet, um energetische Übertragungskapazität vom statischen und konservativen maximalen Strom zu lösen und anstatt dessen die Energieübertragung an den realen Betriebsparametern, insb. dem maßgeblichen Kriterium der Betriebstemperatur, auszurichten.

Eine vorteilhafte Anwendung der Temperaturüberwachung ist es, kritische Systemzustände zu vermeiden und Überschreitungen der maximal zulässigen Temperatur zu verhindern. Solange das Übertragungsverhalten oberhalb des Grenzwertes des Auswertungskriteriums liegt, ist die zulässige Temperatur der Energieübertragungsleitung nicht erreicht. Dazu wird das Übertragungsverhalten des Systems, leitungsspezifisch, frequenzvariant und von den Eigenschaften des Netzanschlusspunktes abhängig, zu einem $a_{max}$ zusammengefasst.

$$\frac{I_{aus}}{I_{ein}} = \alpha_{max}(f, Z_w, Kabeltyp, Kabellänge), \; bei \; \theta_{max} \quad \text{XI}$$

$$\frac{I_{aus}(f_{Anregung}, \theta_{Betriebszustand})}{I_{ein}(f_{Anregung}, \theta_{Betriebszustand})} \geq \alpha_{max} \quad \text{XII}$$

Sollte im operativen Betrieb festgestellt werden, dass die Bedingungen XI und XII nicht mehr gegeben sind und dass $Z_{NVP}$ unverändert ist, ist die maximal zulässige Temperatur erreicht bzw. überschritten. Um Schäden zu vermeiden, sollte das System abgeregelt oder ausgeschaltet werden.

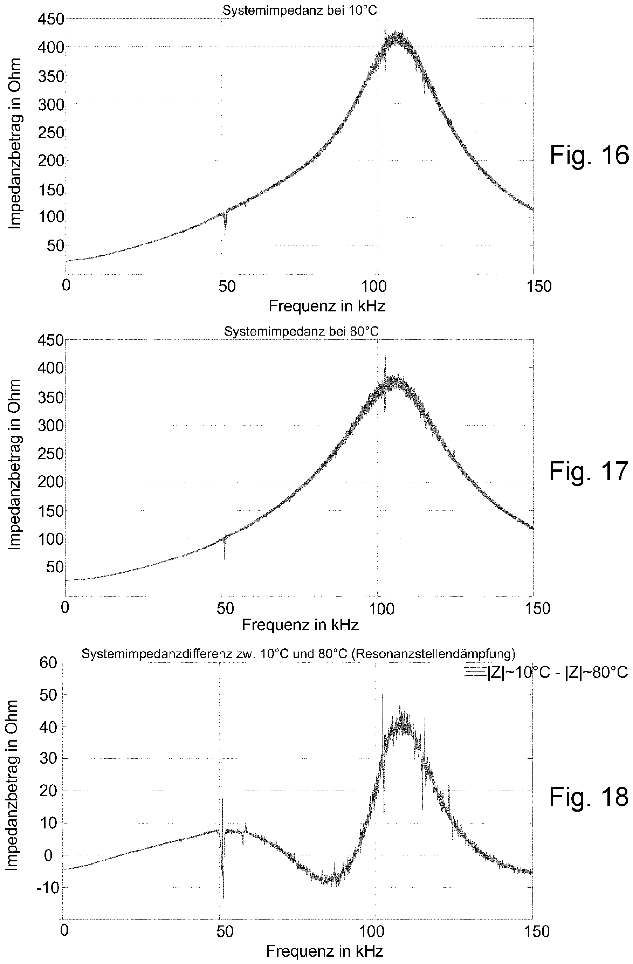

Anhand der Figuren 16 bis 18 wird beispielhaft eine Anwendung des erfindungsgemäßen Verfahrens an elektrischen Leitungen durch Messergebnisse dargestellt. Dabei wurden zwei Koaxialkabel (je 500m, 1mm Leiterquerschnitt, Vollkupfer, 5 geschirmt, beidseitig entkoppelt geerdet) und eine Leistungsquelle (Spitzenberger und Spiess) in Reihe geschaltet. Parallel dazu wurde ein Gerät zur Systemanregung geschaltet (ONIS 1000 morEnergy). Die Kabel wurden in einer Klimakammer aufgetrommelt, verstaut und dort bei unterschiedlichen Umgebungstemperaturen vermessen.

In den Figuren 16 bis 17 ist jeweils die Gesamtsystemimpedanz der Kabel und der Quelle über der Frequenz dargestellt. Die Messungen wurden u.a. bei 10 Grad und 80 Grad durchgeführt. Die Figur 18 zeigt die Differenz der Messergebnisse.

Weitere Ausführungsbeispiele

Ziel der hier vorgeschlagenen Methode ist es, den thermischen Zustand elektrischer Systeme ohne den Einsatz von Temperatursensoren anhand von vordefinierten Übertragungscharakteristiken und deren temperaturabhängigen Änderungen beschreiben zu können. Dazu werden Systeme angeregt oder hochfrequente Signale überlagert. Der Eingangsstrom $I_{ein}$ am Systemeingang und der Ausgangsstrom $I_{aus}$ am Systemausgang werden gemessen. Die zu untersuchenden Systeme müssen somit nur am Anfang und am Ende zugänglich sein. Dabei nutzt die Erfindung den Zusammenhang zwischen dem Übertragungsverhalten des Systems $\frac{I_{aus}}{I_{ein}}$, der Auswahlcharakteristik $\alpha$ und deren Korrelation zur Temperatur in einer Resonanzstelle des Systems:

$$\frac{I_{aus}}{I_{ein}} = \alpha(f, Z_w, Systemeigenschaften), bei\ \theta\ \text{XIII}$$

Die Erfindung ermöglicht es, den Zusammenhang zwischen der aktuellen Betriebstemperatur und dem mit Stromsensoren messbaren Übertragungshalten herzustellen. Folgerichtig werden im operativen Betrieb keine Temperatursensoren benötigt. Damit kann der wirtschaftliche und organisatorisch/logistische Aufwand für die Einbeziehung der Betriebstemperatur in den operativen Betrieb elektrischer Systeme, besonders verteilten oder physisch großen, neu bewertet werden.

Beispiel für die nützliche Umsetzung kann folgendes sein:
Bodenverlegte Kabelstrecken haben im Fehlerfall eine lange Ausfalldauer, aufgrund der komplexen Fehlerlokalisation und des zum Teil enormen Aufwandes, diese physisch zu erreichen. Besonders urbane Regionen, in denen hauptsächlich Kabelstrecken zur elektrischen Energieübertragung verwendet werden, sind aufgrund der Mehrfachnutzung von Kabelschächten und den logistischen Herausforderungen besonders betroffen. Aufgrund der hohen Investitionskosten werden Kabelstrecken nachweislich deutlich über die veranschlagte Lebensdauer hinaus verwendet. Fällt ein Kabel aus, entstehen standortabhänge negative Konsequenzen. So kann sich z.B. in urbanen Regionen die Versorgungssicherheit des betroffenen Bereichs verringern oder die Energieübertragung eines PV-Parks, welcher nur über diese Versorgungsleitung mit dem nächsten Netzverknüpfungspunkt verbunden ist, komplett einbrechen. Durch das frühzeitige Erkennen eines fehlerhaften Kabels können präventive Maßnahmen ergriffen und so die Konsequenzen des Ausfalls minimiert werden.

Das vorgeschlagene "Structure Healthmonitoring" beruht auf dem Vergleich des eingeführten Übertragungsfaktors $\alpha_{max}$ mit dem aktuellen temperaturabhängigen Übertragungsverhalten. Sobald das Übertragungsverhalten des Systems, bei einem linearen und zeitlich invarianten Netzverknüpfungspunkt, bei einer Leistungseinspeisung, die geringer als die zulässige Nennleistung ist, den komplexen Übertragungsfaktor $\alpha(f, Z_w, $ Systemparameter, Länge der Messleitung im DUT) überschreitet, ist davon auszugehen, dass das System fehlerhaft ist oder fehlerhaft wird.

In diesem Zusammenhang können auch Alterungserscheinungen von Leitungen abgeschätzt werden. Besonders im Leerlauffall, in einer Leitungsanalyse ohne die Berücksichtigung von $Z_w$, kann die besondere Übertragungscharakteristik einen Rückschluss auf die reale Deterioration geben.

Kabelstrecken von Solarparks können ggf. nach dem durchschnittlich erwarteten Stromfluss ausgelegt werden, da auch die Übertragung höherer Ströme durch die Einhaltung des vorgestellten Kriteriums zulässig sein kann.

Ein klimawandelbedingter Außentemperaturanstieg, besonders in ohnehin heißen Regionen, kann den zuverlässigen und sicheren Betrieb einschränken. In diesem Fall ist der zulässige maximale Strom kein geeignetes Auswahlkriterium mehr, da die Parameter der bisherigen thermischen Modelle nicht mehr uneingeschränkt gelten.

Die aktuell bei der Produktbeschreibung von Kabeln gewählten Sicherheitsfaktoren können durch ein reales Monitoring verkleinert bzw. entfernt werden, wodurch sich der zulässige Strom erhöht und der benötigte Kabeldurchmesser verringert.

Die Erfindung kann ferner beinhalten:

I. die Bestimmung des temperaturabhängigen Übertragungsverhaltens von elektrischen Systemen durch eine Resonanzstellenauswertung.

a. Das auszuwertende Signal kann:

i. das Übertragungsverhalten des frequenzabhängigen Stromes $I_{aus}/I_{ein}$ und/oder
ii. die frequenzabhängige Netzimpedanz am NVP sein.

b. Die Anregung des elektrischen Systems zur Identifikation der Resonanzstellen kann unter anderem durch:

i. die Ausnutzung von vorhandenen Oberschwingungen (passiv) z.B. durch pulsende Lasten (z.B. Lichtbogenofen) oder wechselnde Betriebszustände,
ii. die zufällige Breitbandanregung,
iii. die getaktete Breitbandanregung,
iv. den "Frequenz-sweep" durch die aktive Einspeisung von einzelnen Stromharmonischen und/oder
v. den "Frequenz-sweep" durch die aktive Einspeisung von stromharmonischen Frequenzbändern erfolgen.

c. Zur operativen Überlagerung der Stromharmonischen können:

i. zusätzliche, netzparallele Stromquellen,
ii. variable hochfrequent zuschaltbare Lasten und/oder
iii. bereits vorhandene, in Reihe geschaltete Betriebsmittel, wie z.B. Wechselrichter, verwendet werden,
iv. indem entweder:

1. Stromharmonische einer einzelnen Frequenz,
2. Stromharmonische mit einem Frequenzband,
3. Stromharmonische mit mehreren Frequenzen oder
4. Stromharmonische mit mehreren Frequenzbändern genutzt werden.

d. Die Messung der Stromsignale kann mittels

i. zusätzlicher Stromsensoren,
ii. Geräten, die bestimmte Verfahren der Inselnetzerkennung wie z.B. "activefrequency-Shift" umsetzen und erfassen und/oder
iii. Sensoren, die bereits in der Schutz- und/oder Regelungstechnik vorhandenen sind, erfolgen.

e. Die Auswertung kann mit einem oder mehreren analytischen Transformationsverfahren erfolgen, z.B.:

i. einer Fourier-Analyse,
ii. Laplace-Transformationen,
iii. einem Differenzenansatz bei störfreien Systemen,
iv. einer Wavelet-Transformation,
v. einer Multiparameteranalyse und/oder
vi. einem selbstlernenden Lösungsalgorithmus.

II. der Aufbau einer Steuer- und Kontrolleinheit zur:

a. Signalverarbeitung,
b. Datenverarbeitung,
c. Kommunikation mit externen Anschlüssen, Anregungssystemen, Sensoren, elektrischen Systemen (DUT) und remote Datenbanken,
d. Auswertung von Signalen und Informationen und
e. Steuerung der Anregung.

III. die Bestimmung von orts- und systemspezifischen Frequenzgrenzen für die Auswahl möglicher und optimaler Anregungsfrequenzen.

IV. Verfahren zur geeigneten Anregung für die Feststellung von thermischen Unterschieden in den Resonanzstellen elektrischer Systeme.

V. Verfahren zur Ermittlung des Grenzwertes $\alpha_{max}$ als Referenzcharakteristik für das temperaturabhängige Übertragungsverhalten elektrischer Systeme.

VI. Verfahren zur Bestimmung der benötigten verfahrens- und frequenzabhängigen Anregungsleistung.

VII. die Ermittlung der adäquaten Wiederholungsrate für die Durchführung der Systemkonditionierung und der Messung.

IX. Verfahren zur Ermittlung und Auswertung des Schirmstroms von Energieübertragungsleitungen.

X. Verfahren um Temperaturüberwachungssysteme, mit und ohne vorhandene Temperatursensoren, zu ermöglichen oder zu verbessern.

XI. Verfahren zur Feststellung des Alterungsprozesses von Übertragungsleitungen, insbesondere von Kabeln, auf Grundlage einer Resonanzstellenauswertung.

XII. Verfahren zum "active health monitoring" von Übertragungsleitungen auf Grundlage einer Resonanzstellenauswertung.

XIII. Verfahren, elektrische Systeme anhand ihre Übertragungseigenschafen in Resonanzstellen zu identifizieren.

XIV. die Belastung bzw. der Betriebspunkt elektrischer Systeme kann mittels einer thermisch varianten Resonanzstellenauswertung beschrieben werden.

XV. Verfahren zur Kapazitätserweiterung des Betriebsstroms von Übertragungsleitungen auf Grundlage einer Resonanzstellenauswertung,

> a. insbesondere für die ortsspezifische permanente Kapazitätserhöhung aufgrund der realen Bewertung der konservativen Auslegung des zulässigen Betriebsstroms und
>
> b. insbesondere für die temporäre Erhöhung des zulässigen Betriebsstroms (z.B. für Verbindungsleitungen von erneuerbaren Energieanlagen mit fluktuierender Erzeugung).

XVI. Verfahren zur Evaluierung von klimawandelbedingten Änderungen der Bodentemperatur in extrem heißen Regionen anhand einer Resonanzstellenauswertung von Übertragungsleitungen.

XVII. die Implementierung des Verfahrens realisiert einen Differentialschutz und einen Überstromschutz durch die benötigten Stromsensoren am Leitungsanfang und - ende. Die Bedingung der zeitlichen Synchronisation ist inhärent durch die Erfindung gegeben.

Weitere Vorteile der Erfindung:

- Der Zusammenhang zwischen der Betriebstemperatur, dem aktuellen Übertragungsverhalten und dem Grenzwert kann ohne Temperatursensoren ermittelt werden. Diese müssten andernfalls mit hohem Aufwand entlang der Leitung verbracht und mit Kommunikationsschnittstellen versehen werden.

- Die für das Verfahren notwendigen Stromsensoren sind in vielen Netzen aufgrund der verbauten Schutztechnik bereits vorhanden. Durch die Integration einer geeigneten Schnittstelle können diese Informationen verwendet werden. Dadurch wird der Umfang des Messsystems weiter verringert.

- Das Verfahren führt einen bis jetzt nicht verwendeten Parameter ein. Diese Größe kann zur Bewertung des aktuellen Betriebszustandes herangezogen werden.

- Durch die Überwachung des Übertragungsverhaltens und die Kenntnis über $\alpha$ können zeitlich begrenzt Ströme oberhalb des leitungsspezifischen zulässigen Stroms zugelassen werden, ohne eine Deterioration der Leitung zu riskieren.

- Es wird ein neues Gütekriterium für das "Health-monitoring" von Übertragungsleitungen geschaffen. Dadurch können Systemausfälle und -einschränkungen minimiert werden.

- Es wird ein neues Gütekriterium für den Alterungsprozess von Übertragungsleitungen geschaffen.

- Es können bei erdverlegten Kabelstrecken statistische Aussagen über die Veränderung der Bodenbeschaffenheit getroffen werden. Durch die Veränderung des thermischen Übergangswiderstandes, der durch periodische Messungen abgeleitet werden kann, können z.B. Veränderungen im Feuchtigkeitsgehalt und der Fortschritt bei Versandung beobachtet werden.

- Die Stromsensoren zur Ermittlung von $I_{aus}$ und $I_{ein}$ können mit geringem Aufwand nachträglich am Leitungsanfang und -ende installiert werden. Besonders geeignet ist das Verfahren jedoch, wenn bereits aktive Schutztechnik verbaut ist, die diese Kenngrößen ohnehin aufnehmen. In diesem Fall ist lediglich noch eine Schnittstelle für die Datenübertragung notwendig.

- Solange die Ausgangsleitung des elektrischen Systems die thermisch relevanten Stellen durchdringt, kann das Verfahren als Temperaturüberwachung bzw. als Überhitzungsschutz genutzt werden. Besonders bei bereits installierten/verbrachten Anlagen und bei besonders großen oder verteilten Systemen kann das Aus- bzw. Nachrüsten von Temperatursensoren unwirtschaftlich oder unmöglich sein. Durch den Einsatz dieser Erfindung ist eine Temperaturüberwachung ohne diese Nachrüstung möglich.

- Die Genauigkeit von vorhandenen Temperaturüberwachungssystemen kann verbessert werden. Oft sind die Sensoren nicht direkt auf den "hotspots" angebracht und es wird lediglich die Umgebungstemperatur ermittelt. Außerdem besteht bei nicht redundanten Systemen immer eine erhöhte Ausfallwahrscheinlichkeit. Mittels des Verfahrens gem. Beispiel 16 können Temperaturüberwachungssysteme durch eine zusätzliche indirekte Überwachung resilienter und durch die Korrelation der Ergebnisse auch genauer werden.

- Unbekannte elektrische Systeme anhand ihrer elektrischen Eigenschaften zu erkennen ist besonders in der dynamischen Netzführung, beim Lastmanagement und für Synthesezwecke von Vorteil [81]. Bisherige Verfahren zur Identifikation elektrischer Systeme existieren, berücksichtigen jedoch keine thermischen Effekte [72]. Das vorgestellte Verfahren überlagert den thermischen Einfluss auf die Übertragungscharakteristik und verbessert durch die zusätzliche Informationsdimension die Identifikation.

- Die Lastzustände und Betriebspunkte von elektrischen Verbund-Systemen bewerten zu können ist besonders bei unbekannten Nutzer-gesteuerten Strukturen wichtig, um z.B. Verbrauchertrends zu erkennen oder den Verschleiß von Systemen abschätzen zu können. Deshalb gibt es Verfahren, die z.B. die Lastprofile von Gebäuden anhand ihrer elektrischen Ladeprofile im Frequenzbereich bewerten und dadurch zuordnen können [82]. Anhand von großen Datenmengen können unbekannte Lasten anhand ihrer Oberschwingungen erkannt und identifiziert werden [83]. Gegenüber den bekannten Verfahren wird in der hier vorgestellten Erfindung der thermische Einfluss berücksichtigt. Dadurch wird die bisherige Ungenauigkeit, durch die thermisch variierende Übertragungscharakteristik, eliminiert und bestehende Verfahren und Ansätze können verbessert oder weiterentwickelt werden. Datensätze, welche den thermischen Zustand berücksichtigen, erlauben KI-Verfahren, durch die erhöhte Informationsmenge, eine schnellere und präzisiere Lösungsfindung.

- Die Kapazitätsgrenze von Energieübertragungsleitungen ist eine wesentliche Hürde für den Ausbau von erneuerbaren Energien und das Erreichen der politisch gesetzten Klimaziele. Kapazitätserweiterungen werden durch den Aus- und Umbau, insbesondere die Querschnittserweiterung, das Verlegen von Parallelleitungen und die Erhöhung der Spannungsebene erreicht. Diese Erfindung ermöglicht eine kostengünstige und fast nicht-invasive Kapazitätserweiterung durch die Ausnutzung realer temperaturabhängiger Maximalströme. Anwendungsspezifisch können so konservativ genutzte Modelle, welche zuvor limitierend wirkten, durch zulässige Realwerte ersetzt werden.

Die Beispiele 11-19 beschreiben konkrete Verwendungszwecke für die vorgestellte Erfindung. Die Methodik gem. Anspruch 1 und/oder Beispiel 1 ist die Grundlage für diese und weitere Verwendungen. Die Anwendungsmöglichkeiten leiten sich aus diesen Verwendungszwecken ab, einige konkrete Beispiele sind im Folgenden beschrieben:

Im Rahmen des Netzausbaus entstehen hohe Kosten und Weiterentwicklungen werden durch die langen Planungs- und Konstruktionszeiten verzögert. Netzbetreiber und Stadtwerke können alternativ zum Ausbau des Energieverteilnetzes die Erfindung nutzen, um die benötigten Übertragungskapazitäten von Freileitungen oder Kabeln zeitnah und kostengünstig zu erweitern.

Produzenten von Freileitungen oder Kabeln, insbesondere von Hochtemperaturleitungen, können die Erfindung in ihre Produkte integrieren, um so noch höhere Ströme zulassen zu können. Dadurch kann ein Marktvorteil erlangt werden. Gegebenenfalls können kleinere Querschnitte für ein konkretes Bedarfsszenario angeboten und somit günstiger verkauft werden.

Auch Kostenstrukturen von Wind- und Solarparkbetreibern oder großen Industriekunden können durch verringerte Netzanschluss- bzw. Ausbaukosten reduziert werden. Geringere Leitungsdurchmesser, kürzere Ausfallzeiten oder ein nicht notwendiger Ausbau tragen dazu bei.

Durch die (zusätzliche) Temperaturüberwachung können kritische Systeme noch sicherer und ggf. genauer überwacht werden. Insbesondere Kernkraftwerke, Medizintechnik und Sicherheitssysteme in Flugzeugbordnetzen können durch die redundante Temperaturüberwachung und damit einhergehende Erhöhung der Ausfallsicherheit profitieren.

Wird das Verfahren für Kabelstrecken verwendet, bekommen Klimaforscher durch die Messdatenaufnahme und die Relation zu den Umgebungstemperaturen eine neue Datengrundlage zur Erfassung von langfristigen Erwärmungstrends und impliziten Veränderungen in der Bodenbeschaffenheit.

Besonders in elektrischen Systemen oder Netzen mit vorhandenen Sensoren, z.B. mit spezieller Schutztechnik, kann das Verfahren nahezu ohne Hardware- und Installationskosten und ohne den einhergehenden Aufwand verwendet werden. Vertreiber dieser Schutztechnik können das Verfahren direkt integrieren, um eine zusätzliche Funktionalität mit geringem Aufwand anzubieten.

Mobile und transportfähige Ausführungen sind möglich, solange die benötigte Hardware, besonders Stromsensoren, Steuereinheit und Anregungssystem, transportfähig ist und die zu untersuchenden Systeme Anschlussmöglichkeiten für die Stromsensoren und ggf. das Anregungssystem bieten.

Das Verfahren kann ebenfalls für die Bewertung und Überwachung von Filtern und Schutztechnik verwendet werden oder bei einem vorhandenen Monitoring-System als aufwandsarme redundante Überwachung integriert werden.

Weiterhin können mit der Erfindung elektrisch leitende Strukturen, z.B. Bahnschienen und Gebäudeverteilschienen, untersucht werden. Auch hier kann anhand von charakteristischen Merkmalen von gemessenen elektrischen Kenngrößen an einer oder mehreren vorab ermittelten Resonanzstellen des elektrischen Systems auf die Temperatur und ggf. die Alterung oder Deterioration geschlossen werden.

Beispiel 1 (siehe Figur 6)

Verfahren zum Ermitteln des thermischen Zustandes von elektrischen Systemen anhand einer Resonanzstellenauswertung, wobei:

a. Resonanzstellen des Systems ermittelt werden,
b. geeignete und optimale Anregungsfrequenzen ermittelt werden,
c. ein Anregungsstrom am Leitungsanfang überlagert wird,
d. (messtechnisch) der Eingangs- und Ausgangsstrom und ggf. die Ein- und Ausgangsspannung ermittelt wird,
e. die Strom- und ggf. Spannungskomponenten durch analytische Transformationsverfahren berechnet und interpretierbar gemacht werden,
f. die Messwerte mit systemspezifischen Grenzwerten verglichen werden,
g. der thermale Zustand bestimmt wird und
h. das Verfahren für ein- und mehrphasige Gleich- und Wechselstromsysteme und Systemstrukturen gem. Figur 5 mit symmetrischen und asymmetrischen Belastungen einzeln, im Microgrid und netzparallel einsetzbar ist.

Beispiel 2 (siehe Figur 11)

Aufbau einer Steuer- und Kontrolleinheit zur Integration in einen Aufbau zur Ermittlung des thermischen Zustandes von elektrischen Systemen anhand einer Resonanzstellenauswertung, wobei:

a. diese die gemessenen Ein- und Ausgangsströme, ggf. Ein und Ausgangsspannungen und die Parameter des Systems erfasst,
b. sie allgemeine Kommunikationsschnittstelle ist,
c. sie Messdaten auswertet,
d. sie für die Auswertung anwendungsspezifische Lösungsverfahren, wie z.B. die Wavelet-, Fourieranalyse oder selbstlernende Algorithmen verwendet,
e. sie die optimale Anregungsfrequenz gem. Beispiel 3 ermittelt und die Anregung gem. Beispiel 6 initiiert,
f. sie auf eine interne Datenbank mit u.a. relevanten Referenzparametern zugreift,
g. sie die geeigneten Wiederholungsraten für die Neukonditionierung des Messsystems und die optimalen Messintervalle festlegt und
h. die Betriebstemperatur anhand von systemspezifischen Grenzwerten feststellt.

Beispiel 3 (siehe Figur 12)

Verfahren zur Ermittlung der optimalen Resonanzstelle zur Anregung eines elektrischen Systems zur Ermittlung des thermischen Zustandes anhand einer Resonanzstellenauswertung, wobei:

a. während der Messsystemkonditionierung die Eigenschaften des zu untersuchenden Systems festgestellt werden,
b. das zu untersuchende System für mindestens einen Messzykluss linear und zeitinvariant ist und dies in der initialen Systemkonditionierung festgestellt wurde,
c. die bestehende Oberschwingungsbelastung im Vergleich zur Amplitude der geplanten Überlagerung im Frequenzband der Resonanzstelle niedrig sein sollte. Besonders sind die Eigenschaften von Filtern oder Systemen die Filtereigenschaften aufweisen zu beachten,
d. die Anregungsfrequenz oberhalb des regulierten Bereichs für Oberschwingungen liegt oder den zulässigen THD nicht überschreitet, damit sind Frequenzen über 2000 bzw. 9000 Hz ist und
e. anderweitig beanspruchte Frequenzbänder, wie z.B. für "powerline communication", nicht angeregt werden.

Beispiel 4

Anregungssystem zur Integration in einen Aufbau zur Ermittlung des thermischen Zustandes von elektrischen Systemen durch eine Resonanzstellenauswertung, wobei:

a. ein Anregungssystem gem. Figur 7 verwendet wird,
b. die Anregungsleistung durch ein System gem. des Beispiels 6 vorgegeben und umgesetzt wird und
c. die maximalle Taktfrequenz mindestens der geforderten Anregungsfrequenz gem. Beispiel 3 entspricht.

Beispiel 5

Verfahren zur Ermittlung des temperaturabhängigen Übertragungskoeffizienten, insbesondere die Grenzwerte bei kritischen Temperaturen, zur Ermittlung des thermischen Zustandes von elektrischen Systemen durch eine Resonanzstellenauswertung, wobei:

a. die Übertragungskoeffizienten eine system- und ggf. netzanschlussspezifische Korrelation zwischen der Betriebstemperatur und den gemessenen Systemparametern herstellen,
b. der kritische Grenzwert das Systemverhalten bei der maximal zulässigen Temperatur repräsentiert,
c. dieser Grenzwert und die Übertragungskoeffizienten durch Teststände und Simulationen in Abhängigkeit diverser Parameter, u.a. denen des ggf. vorhandenen Netzanschlusspunktes, für einzelne Systeme bzw. Baureihen bestimmt werden.

Beispiel 6

Verfahren zur Ermittlung der optimalen Signalamplitude des Anregungssignals zur Ermittlung des thermischen Zustandes von elektrischen Systemen durch eine Resonanzstellenauswertung, wobei:

a. sensorabhängig die Dämpfung der elektrischen Systeme berücksichtigt wird,
b. der optimale Messbereich des Stromsensors gem. Beispiel 3 berücksichtigt wird und
c. die Anregungsleistung des Anregungssystems gem. Beispiel 4 berücksichtigt wird.

Beispiel 7

Verfahren zur Ermittlung der optimalen Wiederholungsrate der Systemanregung zur Ermittlung des thermischen Zustandes von elektrischen Systemen durch eine Resonanzstellenauswertung, wobei:

a. durch die Anwendung eine dynamische thermische Systemüberwachung sichergestellt wird,
b. die Systembelastung durch Anregung minimiert wird,
c. die Neubewertung hinreichend häufig durchgeführt wird,
d. der aktuelle thermische Zustand des Systems berücksichtigt wird,
e. die aktuelle absolute Systembelastung, besonders der Eingangsstrom, berücksichtigt wird und
f. die Bedingungen VII und VIII des Abschnitts g berücksichtigt werden.

Beispiel 8

Verfahren zur Ermittlung der optimalen Wiederholungsrate der Systemkonditionierung zur Ermittlung des thermischen Zustandes von elektrischen Systemen durch eine Resonanzstellenauswertung, wobei:

a. die statistische Änderung der Netzimpedanz am Netzverknüpfungspunkt berücksichtigt wird,
b. die Absolutwerte der Übertragungscharakteristik auf Plausibilität geprüft werden (ob diese der Erwartungshaltung der entsprechenden Anregungsfrequenz entsprechen)
c. und die Änderung der Übertragungscharakteristik einem thermischen Model entsprechen kann.

Beispiel 9

Verfahren und Aufbau zur Erzeugung von zusätzlichen systemfremden Resonanzstellen zur Ermittlung des thermischen Zustandes von elektrischen Systemen durch eine Resonanzstellenauswertung, wobei:

a. das elektrische System (DUT) durch eine Systemkomponente erweitert wird, welche einen Schwingkreis mit der Impedanz des DUT erzeugt,
b. beispielsweise das Verfahren gem. EP3010149B1 genutzt werden kann,

c. die Frequenz und Amplitude der zusätzlichen Resonanzstelle dynamisch durch die Steuereinheit bestimmt wird,

d. Rückwirkungen auf den NVP, insb. auf vorhandene Filter und Schutztechnik, beachtet werden und

e. in der Systemerweiterung zur Resonanzstellenerzeugung Temperatursensoren verbaut sind, um zur dynamischen Frequenzanpassung beizutragen.

Beispiel 10

Verfahren zur Berücksichtigung des Schirmstroms bei der thermischen Bewertung von Energieübertragungsleitungen zur Ermittlung des thermischen Zustandes von elektrischen Systemen durch eine Resonanzstellenauswertung, wobei:

a. es sich um eine Verfahrenserweiterung des Anspruchs 1 und/oder des Beispiels 1 für geerdete Energieübertragungsleitungen handelt,

b. zusätzliche Stromsensoren an allen Erdungspunkten verwendet werden,

c. der Schirmstrom durch induktive Kopplung vom Leiterstrom bestimmt wird,

d. das Übertragungsverhalten des Schirmstroms auch von der Schirmtemperatur abhängt,

e. die elektromagnetische Kopplung instantan ist und die thermische Kopplung mit systemspezifischen Verzögerungen auftritt,

f. die zeitliche Änderung des Übertragungsverhaltens des Schirmstromes als neuer qualitativer Parameter für diverse Anwendungen genutzt werden kann und

g. das Verfahren für ein- und mehrphasige Energieübertragungsleitungen in Gleich- und Wechselstromsystemen gem. Figur 5 mit symmetrischen und asymmetrischen Belastungen einzeln, im Microgrid und netzintegriert einsetzbar ist.

Im Folgenden werden Beispiele im Zusammenhang mit Methoden zur Umsetzung des Verfahrens und deren Anwendungsfälle formuliert. Diese sind wobei sie für ein- und mehrphasige Gleich- und Wechselstromsysteme und Systemstrukturen gem. Figur 5 mit symmetrischen und asymmetrischen Belastungen einzeln, im Microgrid und netzparallel einsetzbar sind.

Beispiel 11

Verfahren zur Integration eines Überhitzungsschutzes und/oder einer Temperaturüberwachung in einem System ohne Temperatursensoren, wobei:

a. das Verfahren auf der Grundlage des Beispiels 1 basiert,

b. der Grenzwert gem. Beispiel 5 angewendet wird,

c. Daten zu den temperaturabhängigen Eigenschaften des Systems vorliegen oder vorab bestimmt werden können,

d. die Wiederholungsrate der Messung gem. Beispiel 7 bestimmt wird,

e. das System an einen internen Regelungsprozess gem. Beispiel 2 oder eine Leitwarte angeschlossen ist und

f. eine Entscheidungsgrundlage für eine mögliche Abschaltung, Trennung oder Leistungsreduktion, u.a. zum Schutz der Anlage, geschaffen wird.

Beispiel 12

Verfahren zur Erweiterung eines Überhitzungsschutzes und/oder einer Temperaturüberwachung in einem System durch die Einführung zusätzlicher Kontrollparameter, wobei:

a. ein elektrisches System mit Temperaturüberwachung, z.B. durch Temperatursensoren, vorliegt,

b. das Überwachungssystem um das Verfahren gem. Beispiel 1 erweitert wird,

c. durch die Erweiterung ein zusätzlicher und unabhängiger Kontrollparameter gem. Beispiel 1 und 5 eingeführt wird,

d. die Ausfallsicherheit und die Anomalieerkennung durch die Redundanz verbessert werden und

e. besonders in kritischen Systemen und bei kritischen Prozessen die instantane Veränderung des neuen Kontrollparameters eine schnellere Reaktion bei fehlerbedingter Erwärmung zulässt.

Beispiel 13

Verfahren und Aufbau zur Bestimmung der alterungsbedingten Veränderung eines elektrischen Systems mittels einer temperaturabhängigen Resonanzstellenauswertung, wobei:

a. die Eigenschaften eines elektrischen Systems gem. des Beispiels 5 festgestellt wurden,

b. das elektrische System über einen hinreichenden Zeitraum periodisch gem. des Verfahrens nach Anspruch 1 untersucht wird,

c. das System seine elektrischen Eigenschaften verändert, z.B. durch Oxidation,

d. eine Veränderung der thermisch abhängigen Übertragungscharakteristik festgestellt werden kann und

e. die Veränderung der Übertragungscharakteristik ein abstrahiertes Maß für die Degradation ist.

Beispiel 14

Verfahren zur aktiven Fehlerüberwachung ("active healthmonitoring") von elektrischen Systemen mittels einer temperaturabhängigen Resonanzstellenauswertung, wobei:

a. die Eigenschaften eines elektrischen Systems gem. des Beispiels 5 festgestellt wurden,

b. das elektrische System gem. Beispiel 1 ausgewertet wird,

c. Fehlerereignisse die elektrischen Eigenschaften des elektrischen Systems verändern,

d. diese Veränderungen sich auf die Übertragungscharakteristik auswirken,

e. die Veränderungen kategorisiert und deren Auswirkung auf das Übertragungsverhalten interpretiert werden,

f. diese Daten aggregiert und durch intelligente Verfahren ausgewertet werden,

g. signifikante Änderungen im Übertragungsverhalten direkt auf Änderungen der Systemtopologie oder auf Systemfehler zurückzuführen sind und

h. die Netztopologie außerhalb des betrachteten Systems als Fehlerquelle durch eine erneute Kalibrierung oder eine analytische Unterscheidung ausgeschlossen wird.

Beispiel 15

Verfahren zur Identifikation von elektrischen Systemen mittels einer temperaturabhängigen Resonanzstellenauswertung, wobei:

a. das Übertragungsverhalten von Stromharmonischen bzw. der Impedanzgang elektrischer Systeme identifizierbar und messbar ist,

b. aggregierte Daten, welche gem. Beispiel 1 und 5 aufgenommen wurden, vorliegen,

c. diese Daten Grundlage der Systemidentifikation sind,

d. mittels eines erweiterten Messaufbaus mit Strom- und Temperatursensoren sowohl die Übertragungscharakteristik als auch die Betriebstemperatur des zu identifizierenden Systems bestimmt wird,

e. ein intelligenter und selbstlernender Algorithmus die Messungen durchführt, um mittels der vorhandenen Datenbank optimale Unterscheidungsmerkmale zu antizipieren und das System auf diese zu testen und

f. anhand dieser Auswertung unbekannte elektrische Systeme identifiziert werden können.

Beispiel 16

Verfahren zur Bestimmung des Betriebspunktes bzw. der Belastung eines elektrischen Systems mittels einer temperaturabhängigen Resonanzstellenauswertung, wobei:

a. das zu untersuchende System und dessen thermische Übertragungseigenschaften gem. Beispiel 5 bekannt sind,

b. mittels eines erweiterten Messaufbaus mit Strom- und Temperatursensoren sowohl die Übertragungscharakteristik als auch die Betriebstemperatur des zu identifizierenden Systems bestimmt wird,

c. die Übertragungscharakteristik belastungs- und betriebspunktvariant ist,

d. ein intelligenter und selbstlernender Algorithmus die Messungen durchführt, um mittels der vorhandenen Datenbank optimale Unterscheidungsmerkmale zu antizipieren und das System auf diese zu testen,

e. die Auswertung der Übertragungscharakteristik den Belastungszustand bzw. den Betriebspunkt eines elektrischen Systems identifiziert.

Beispiel 17

Verfahren zur Ermittlung der Umgebungstemperatur und -eigenschaften elektrischer Kabelsysteme mittels einer temperaturabhängigen Resonanzstellenauswertung, wobei:

a. die Betriebstemperatur des Kabels mit einem Aufbau gem. dem Grundprinzip aus Beispiel 1 und 10 festgestellt wird,

b. eine Erwartungshaltung bezüglich des absoluten Leiterstroms und der Übertragungscharakteristik bei einer Referenztemperatur besteht,

c. die belastungs-/stromverknüpfte Erwärmung des Systems einen instantanen Effekt auf die Charakteristik gem. Beispiel 5 hat,

d. diese veränderte Charakteristik ebenfalls instantan einen veränderten Strom im Kabelschirm verursacht,

e. die Erwärmungsgeschwindigkeit des Kabelschirms neben den eigenen Strom-WärmeVerlusten auch durch Wärmeübertragung vom Leiter und der Außentemperatur abhängig ist,

f. die Übertragungscharakteristik des Außenleiters gem. einem abgewandelten Verfahren gem. Beispiel 5 bestimmt ist,

g. unterschiedliche Umgebungen unterschiedliche thermische Übertragungskoeffizienten haben und diese bekannt sind,

h. die Änderungsrate der Übertragungscharakteristik des Kabelschirms ein Rückschluss auf die Außentemperatur ermöglicht.

Beispiel 18

Verfahren zur Erweiterung der Übertragungskapazitäten von elektrischen Leitungen mittels einer temperaturabhängigen Resonanzstellenauswertung, wobei:

a. das Verfahren gem. Beispiel 1 auf elektrische Energieübertragungsleitungen angewendet wird,

b. der Betriebsstrom nicht (wie üblich) durch einen statisch vorbestimmten Wert begrenzt ist,

c. ein beliebig hoher Strom zugelassen wird, solange die Übertragungscharakteristik gem. Beispiel 5 die vordefinierte kritische Übertragungscharakteristik nicht überschreitet,

d. der reale maximale Strom somit in Abhängigkeit der realen Betriebstemperatur definiert wird und

e. eine umgebungsspezifische Übertragungskapazitätserweiterung angewendet wird.

Literatur

[1] A. Morched, L. Marti und J. Ottevangers, "A high frequency transformer model for the EMTP", IEEE Trans. Power Delivery, Jg. 8, Nr. 3, S. 1615-1626, 1993, doi: 10.1109/61.252688.

[2] A. Morched, B. Gustavsen und M. Tartibi, "A universal model for accurate calculation of electromagnetic transients on overhead lines and underground cables", IEEE Trans. Power Delivery, Jg. 14, Nr. 3, S. 1032-1038, 1999, doi: 10.1109/61.772350.

[3] A. S. Morched, J. H. Ottevangers und L. Marti, "Multi-port frequency dependent network equivalents for the EMTP", IEEE Trans. Power Delivery, Jg. 8, Nr. 3, S. 1402-1412, 1993, doi: 10.1109/61.252667.

[4] Finding Danger where It's Impossible to Look | Yokogawa Electric Corporation. [Online]. Verfügbar unter: https://www.yokogawa.com/library/resources/application-notes/power-cable-monitoring-for-overheating/ (Zugriff am: 30. Mai 2022).

[5] Monitoring Electrical Cable Challenge: The Future of Underground Inspection | HeroX. [Online]. Verfügbar unter: https://www.herox.com/DLCCableChallenge (Zugriff am: 30. Mai 2022).

[6] D. Clements und P. Mancarella, "Risk of cable overheating and premature ageing due to load control measures" in 2017 IEEE Manchester PowerTech, Manchester, United Kingdom, 2017, S. 1-5, doi: 10.1109/PTC.2017.7981024.

[7] S. Czapp, F. Ratkowski, S. Szultka und A. Tomaszewski, "Overheating of Underground Power Cable Line Due to Its Partial Exposition to Solar Radiation" in *2019 24th International Conference on Methods and Models in Automation and Robotics (MMAR)*, Międzyzdroje, Poland, 2019, S. 396-400, doi: 10. 1 109/M MA R. 2019.886469 1.

[8] K. Wu et al., "Study on pyrolysis characteristics of polyethylene outer sheath of 110kV power cable under overheating defect" in 2021 IEEE International Conference on Emergency Science and Information Technology (ICESIT), Chongqing, China, 11/22/2021 - 11/24/2021, S. 307-310, doi: 10.1109/ICESIT53460.2021.9697002.

[9] Bundesnetzagentur, "Monitoringbericht 2021".

[10] W. Zhu, X. Wang, A. Liang, Y. Zhao, X. Fan und G. Liu, "Thermal Effect of Short-term Overload on High-voltage Cross-linked Polyethylene (XLPE) Cable Insulation", IOP Conf. Ser.: Mater. Sci. Eng., Jg. 746, Nr. 1, S. 12001, 2020, doi: 10.1088/1757-899x/746/1/012001.

[11] Y.-C. Yu und S.-W. Jee, "Investigation on the Ignition of Self-Regulating Heating Cables due to Overheating", Fire Sci. Eng., Jg. 35, Nr. 6, S. 100-104, 2021, doi: 10.7731/KIFSE.f710fe7e.

[12] DIN IEC 62895 (VDE 0276-2895), Feb. 2019.

[13] S. Ali, A. Hanif und Q. Ahmed, "Review in thermal effects on the performance of electric motors" in 2016 International Conference on Intelligent Systems Engineering (ICISE), 2016, doi: 10.1109/intelse.2016.7475166.

[14] R. Rothe und K. Hameyer, "Life expectancy calculation for electric vehicle traction motors regarding dynamic temperature and driving cycles" in Drives Conference (IEMDC), Niagara Falls, ON, Canada, 2011, S. 1306-1309, doi: 10.1109/IEMDC.2011.5994793.

[15] C. Kral, A. Haumer und S. B. Lee, "Innovative thermal model for the estimation of permanent magnet and stator winding temperatures" in 2012 IEEE Energy Conversion Congress and Exposition (ECCE), Raleigh, NC, USA, 2012, S. 2704-2711, doi: 10.1109/ECCE.2012.6342386.

[16] Oliver Wallscheid, Tobias Huber, Wilhelm Peters, Joachim B¨ocker, Real-Time Capable Methods to Determine the Magnet Temperature of Permanent Magnet Synchronous Motors - A Review: Oct. 29, 2014 - Nov. 1, 2014, Dallas, TX, U.S.A. Piscataway, NJ: IEEE, 2014. [Online]. Verfügbar unter: http://ieeexplore.ieee.org/servlet/opac?punumber=7036020

[17] T. Sebastian, "Temperature effects on torque production and efficiency of PM motors using NdFeB magnets", IEEE Trans. on Ind. Applicat., Jg. 31, Nr. 2, S. 353-357, 1995, doi: 10.1109/28.370284.

[18] N. Amann, J. Bocker und F. Prenner, "Active Damping of Drive Train Oscillations for an Electrically Driven Vehicle", IEEE/ASME Trans. Mechatron., Jg. 9, Nr. 4, S. 697-700, 2004, doi: 10.1109/TMECH.2004.839036.

[19] T. Orlik, J. Klock und W. Schumacher, "Influence of magnetic saturation on sensorless-controlled interior permanent magnet synchronous motors" in 2013 15th European Conference on Power Electronics and Applications (EPE), Lille, France, 9/2/2013 - 9/6/2013, S. 1-10, doi: 10.1109/EPE.2013.6631753.

[20] Oliver Wallscheid, Prof. Dr.-Ing. Joachim Böcker, "Wirkungsgradoptimale Arbeitspunktsteuerung für einen permanenterregten Synchronmotor mit vergrabenen Magneten unter Berücksichtigung von Temperatureinflüssen Efficiency-Optimal Operation Point Control for an Interior Perma-nent Magnet Synchronous Motor Considering Temperature Varia-tions", Conference: Internationaler ETG-Kongress, Jg. 2013, 2013. [Online]. Verfügbar unter: https://www.researchgate.net/publication/260793787 Wirkungsgradoptimale Arbeitspunktsteuerung_fur_einen_permanenterregten_Synchronmotor_mit_vergrabenen_Magneten_unter_ Berucksichtigung_von_Temperatureinflussen

[21] M. Y. Frolov und A. G. Fishov, "Electric parameters identification of synchronous generator connecting to the grid" in 2016 11th International Forum on Strategie Technology (IFOST), Novosibirsk, Russia, 2016, S. 243-246, doi: 10.1109/IFOST.2016.7884238.

[22] J. Kúdelčík, P. Bury, J. Drga, P. Kopčanský, V. Závišová und M. Timko, "Temperature Effect on the Structure of Transformer Oil Based Magnetic Fluids Using Acoustic Spectroscopy", Acta Phys. Pol. A, Jg. 121, 5-6, S. 1169-1171, 2012, doi: 10.12693/APhysPolA.121.1169.

[23] Y. Du, M. Zahn, N. Altamirano und M. Sarda, Moisture and temperature effects on the dielectric spectrum of transformer pressboard: Conference on Electrical Insulation and Dielectric Phenomena, October 20-24, 2002, Cancun, Quintana Roo, Mexico. Piscataway, N.J: IEEE Service Center, 2002. [Online]. Verfügbar unter: http://ieeexplore.ieee.org/servlet/opac?punumber=8111

[24] J. H. Yew, M. K. Pradhan und T. K. Saha, "Effects of moisture and temperature on the frequency domain spectroscopy analysis of power transformer insulation" in Energy Society General Meeting, Pittsburgh, PA, USA, 2008, S. 1-8, doi: 10.1109/PES.2008.4596244.

[25] J. Hill, Z. Wang, Q. Liu, C. Krause und G. Wilson, "Analysing the power transformer temperature limitation for avoidance of bubble formation", High Voltage, Jg. 4, Nr. 3, S. 210-216, 2019, doi: 10.1049/hve.2019.0034.

[26] S. A. Mousavi, M. Sedighizadeh, A. Hekmati und M. Bigdeli, "Artificial neural network based method for temperature correction in FDS measurement of transformer insulation", J. Phys. D: Appl. Phys., Jg. 53, Nr. 14, S. 145103, 2020, doi: 10.1088/1361-6463/ab62c2.

[27] T. Lochner, R. M. Kluge, J. Fichtner, H. A. EI-Sayed, B. Garlyyev und A. S. Bandarenka,Temperature Effects in Polymer Electrolyte Membrane Fuel Cells", ChemElectroChem, Jg. 7, Nr. 17, S. 3545-3568, 2020, doi: 10.1002/celc.202000588.

[28] A. Kraytsberg und Y. Ein-Eli, "Review of Advanced Materials for Proton Exchange Membrane Fuel Cells", Energy Fuels, Jg. 28, Nr. 12, S. 7303-7330, 2014, doi: 10.1021/ef501977k.

[29] Andreas Vath, "Dreidimensionale dynamische Modellierung und Berechnung von Polymer-Elektrolyt-Membran-Brennstoffzellensystemen", 2009.

[30] Kejun Qian, Chengke Zhou, Vue Yuan, Malcolm Allanl, Temperature Effect on Electric Vehicle Battery Cycle Life in Vehicle-to-Grid Applications: China International Conference on Electricity Distribution (CICED), 2010 13 - 16 Sept. 2010, Nanjing, China. Piscataway, NJ: IEEE, 2010. [Online]. Verfügbar unter: http://ieeexplore.ieee.org/servlet/opac?punumber=5723784

[31] W. Xu, J. Xu, B. Liu, J. Liu und X. Yan, "A multi-timescale adaptive dual particle filter for state of charge estimation of lithium-ion batteries considering temperature effect", Energy Sei Eng, Jg. 8, Nr. 8, S. 2784-2798, 2020, doi:

10.1002/ese3.694.

[32] K. Li, F. Wei, K. J. Tseng und B.-H. Soong, "A Practical Lithium-Ion Battery Model for State of Energy and Voltage Responses Prediction Incorporating Temperature and Ageing Effects", IEEE Trans. Ind. Electron., Jg. 65, Nr. 8, S. 6696-6708, 2018, doi: 10.1109/TIE.2017.2779411.

[33] K. Liu, C. Zou, K. Li und T. Wik, "Charging Pattern Optimization for Lithium-Ion Batteries With an Electrothermal-Aging Model", IEEE Trans. Ind. Inf., Jg. 14, Nr. 12, S. 5463-5474, 2018, doi: 10.1109/TII.2018.2866493.

[34] P. Kreczanik, P. Venet, A. Hijazi und G. Clerc, "Study of Supercapacitor Aging and Lifetime Estimation According to Voltage, Temperature, and RMS Current", IEEE Trans. Ind. Electron., Jg. 61, Nr. 9, S. 4895-4902, 2014, doi: 10.1109/tie.2013.2293695.

[35] R. Kristina Schneider Barcelos, W. Cardoso Celeste, L. Otavio Rigo Junior und G. de Lorena Diniz Chaves, "Identification of Similar Loads for Electric Power Management in Smart Grid", IEEE Latin Am. Trans., Jg. 17, Nr. 08, S. 1318-1325, 2019, doi: 10.1109/TLA.2019.8932341.

[36] Thermal degradation of polyimide insulation and its effect on electromagnetic coil impedance, 2017. [Online]. Verfügbar unter: https://www.mfpt.org/wp-content/uploads/2019/10/paper- -jameson.pdf

[37] Mesago PCIM GmbH, PCIM Europe 2018: International Exhibition and Conference for Power Electronics, Intelligent Motion, Renewable Energy and Energy Management: 5-7 June 2018 Nürnberg. Frankfurt am Main: VDE, 2018. [Online]. Verfügbar unter: http://ieeexplore.ieee.org/xpl/mostRecentIssue.isp?punumber=8402798

[38] M. Aly, E. M. Ahmed und M. Shoyama, "Developing new lifetime prolongation SVM algorithm for multilevel inverters with thermally aged power devices" (en), IET Power Electronics, Jg. 10, Nr. 15, S. 2248-2256, 2017, doi: 10.1049/ietpel.2017.0327.

[39] X. Perpiñà, A. Castellazzi, M. Piton, M. Mermet-Guyennet und J. Millán, "Failure-relevant abnormal events in power inverters considering measured IGBT module temperature inhomogeneities", Microelectronics Reliability, Jg. 47, 9-11, S. 1784-1789, 2007, doi: 10.1016/j.microrel.2007.07.071.

[40] H. Bessei, Sicherungshandbuch: Starkstromsicherungen ; das Handbuch für Anwender von Niederspannungs- und Hochspannungssicherungen, 5. Aufl. Lappersdorf: Kerschensteiner, 2011.

[41] G. Ziegler, Digitaler Differentialschutz: Grundlagen und Anwendungen, 2. Aufl. Erlangen: Publicis Publ, 2013. [Online]. Verfügbar unter: http://swb.eblib.com/patron/FullRecord.aspx?p=1120067

[42] K. Gouramanis und C. Demoulias, "Cable Overheating in an Industrial Substation Feeder Due to Untransposed Power Cables - Measurement and Simulation" in EUROCON 2005 - The International Conference on "Computer as a Tool", Belgrade, Serbia and Montenegro, 2005, S. 1438-1441, doi: 10.1109/EURCON.2005.1630233.

[43] A. Hochrainer, Symmetrische Komponenten in Drehstromsystemen. Berlin, Heidelberg: Springer Berlin Heidelberg, 1957.

[44] IEEE Standard for Calculating the Current-Temperature Relationship of Bare Overhead Conductors, Piscataway, NJ, USA.

[45] "Ageing mechanisms and diagnostics for power cables - an overview", IEEE Electr. Insul. Mag., Jg. 17, Nr. 1, S. 14-22, 2001, doi: 10.1109/57.901613.

[46] V. A. Shikhin, A. E. Kochengin und G. P. Pavliuk, "Significant Events Detection and Identification through Electrical Grid Load Profile" in 2018 Renewable Energies, Power Systems & Green Inclusive Economy (REPS-GIE), Casablanca, 2018, S. 1-5, doi: 10.1109/REPSGIE.2018.8488857.

[47] Frolov M. Yu. und Fishov A. G., "Identification of Synchronous Generator Electric Parameters Connected to the Distribution Grid", Problems of the Regional Energetics, Jg. 33, Nr. 1, S. 32-39, 2017. [Online]. Verfügbar unter: https://doai.org/article/070bf5bb2b1447ac9d23ca4c77f01541

[48] E. Bulycheva und S. Yanchenko, "Real-time harmonic identification under varying grid conditions", Serb J Electr Eng, Jg. 18, Nr. 1, S. 29-48, 2021, doi: 10.2298/SJEE2101029B.

[49] R. McCarty und R. Piper, "Voltage-Current Curves to Characterize Thermoelectric Generators" (En;en), J. Electron. Mater., Jg. 44, Nr. 6, S. 1896-1901, 2015, doi: 10.1007/s11664-014-3585-4.

[50] L. Peretto et al., "Monitoring Cable current and Laying Environment Parameters for Assessing the Aging Rate of MV Cable Joint Insulation" in 2018 IEEE Conference on Electrical Insulation and Dielectric Phenomena (CEIDP), Cancun, 2018, S. 390-393, doi: 10.1109/CEIDP.2018.8544904.

[51] F. Donazzi, E. Occhini und A. Seppi, "Soil thermal and hydrological characteristics in designing underground cables", Proc. Inst. Electr. Eng. UK, Jg. 126, Nr. 6, S. 506, 1979, doi: 10.1049/piee.1979.0119.

[52] P. Caramia, G. Carpinelli, A. Russo und P. Verde, "Estimation of thermal useful life of MV/LV cables in presence of harmonics and moisture migration" in 2003 IEEE Bologna Power Tech, Bologna, Italy, 2003, S. 130-134, doi: 10.1109/PTC.2003.1304300.

[53] C. Holyk und G. J. Anders, "Power Cable Rating Calculations - A Historical Perspective [History]", IEEE Ind. Appl. Mag., Jg. 21, Nr. 4, S. 6-64, 2015, doi: 10. 1 109/M IAS.2015.2417094.

[54] Z. Yu, S. Xiaohui, L. Jianfang und G. Fei, "Cable Overheating Risk Warning Method Based on Impedance Parameter Estimation in Distribution Network" (en), IOP Conf. Ser.: Mater. Sci. Eng., Jg. 199, Nr. 1, S. 12044, 2017, doi: 10.1088/1757-899X/199/1/012044.

[55] A. Jamali-Abnavi, H. Hashemi-Dezaki, A. Ahmadi, E. Mahdavimanesh und M.-J. Tavakoli, "Harmonic-based thermal analysis of electric arc furnace's power cables considering even current harmonics, forced convection, operational scheduling, and environmental conditions", International Journal of Thermal Sciences, Jg. 170, S. 107135, 2021, doi: 10.1016/j.ijthermalsci.2021.107135.

[56] H. M. Lee, G. S. Lee, G.-Y. Kwon, S. S. Bang und Y.-J. Shin, "Industrial Applications of Cable Diagnostics and Monitoring Cables via Time-Frequency Domain Reflectometry", IEEE Sensors J., Jg. 21, Nr. 2, S. 1082-1091, 2021, doi: 10.1109/JSEN.2020.2997696.

[57] K. Walczak und J. Gielniak, "Temperature Distribution in the Insulation System of Condenser-Type HV Bushing-Its Effect on Dielectric Response in the Frequency Domain", Energies, Jg. 14, Nr. 13, S. 4016, 2021, doi: 10.3390/en14134016.

[58] A. Specht und J. Bocker, "Observer for the rotor temperature of IPMSM" in 2010 14th International Power Electronics and Motion Control Conference (EPEIPEMC 2010), Ohrid, Macedonia, 2010, doi: 10.1109/EPEPEMC.2010.5606818.

[59] A. Specht, O. Wallscheid und J. Bocker, "Determination of rotor temperature for an interior permanent magnet synchronous machine using a precise flux observer" in 2014 International Power Electronics Conference (IPEC-Hiroshima 2014 ECCE-ASIA), Hiroshima, Japan, 2014, S. 1501-1507, doi: 10.1109/IPEC.2014.6869784.

[60] M. Ganchev, C. Kral und T. Wolbank, "Hardware and software implementation of sensorless rotor temperature estimation technique for Permanent Magnet Synchronous Motor" in 2012 Electrical Systems forAircraft, Railway and Ship Propulsion (ESARS), Bologna, Italy, 2012, S. 1-6, doi: 10.1109/ESARS.2012.6387420.

[61] M. Ganchev, C. Kral und T. Wolbank, "Sensorless rotor temperature estimation of permanent magnet synchronous motor under load conditions" in IECON 2012 - 38th Annual Conference of IEEE Industrial Electronics, Montreal, QC, Canada, 2012, S. 1999-2004, doi: 10.1109/IECON.2012.6388895.

[62] D. D. Reigosa, F. Briz, P. Garcia, J. M. Guerrero und M. W. Degner, "Magnet Temperature Estimation in Surface PM Machines Using High-Frequency Signal Injection", IEEE Trans. on Ind. Applicat., Jg. 46, Nr. 4, S. 1468-1475, 2010, doi: 10.1109/TIA.2010.2049816.

[63] D. Reigosa, F. Briz, M. W. Degner, P. Garcia und J. M. Guerrero, "Magnet temperature estimation in surface PM machines during six-step operation" in 2011 IEEE Energy Conversion Congress and Exposition (ECCE), Phoenix, AZ, USA, 2011, S. 2429-2436, doi: 10.1109/ECCE.2011.6064091.

[64] C. Kral, A. Haumer und S. B. Lee, "A Practical Thermal Model for the Estimation of Permanent Magnet and Stator Winding Temperatures", IEEE Trans. Power Electron., Jg. 29, Nr. 1, S. 455- 464, 2014, doi: 10.1109/TPEL.2013.2253128.

[65] T. Bauml, C. Jungreuthmayer und C. Kral, "An innovative parametrization method for a thermal equivalent circuit model of an interior permanent magnet synchronous machine" in IECON 2011 - 37th Annual Conference of IEEE Industrial Electronics, Melbourne, Vic, Australia, 2011, S. 1746-1751, doi: 10.1109/IECON.2011.6119570.

[66] X. Lu, S. Zhou und C. Zhao, "Finite element method analyses of ambient temperature effects on characteristics of piezoelectric motors", Journal of Intelligent Material Systems and Structures, Jg. 25, Nr. 3, S. 364-377, 2014, doi: 10.1177/1045389X13498309.

[67] S. Cheng, Du Yi, J. A. Restrepo, P. Zhang und T. G. Habetler, "A Nonintrusive Thermal Monitoring Method for Induction Motors Fed by Closed-Loop Inverter Drives", IEEE Trans. PowerElectron., Jg. 27, Nr. 9, S. 4122-4131, 2012, doi: 10.1109/TPEL.2012.2188045.

[68] J. H. Yew, T. K. Saha und A. J. Thomas, "Impact of temperature on the frequency domain dielectric spectroscopy for the diagnosis of power transformer insulation" in 2006 IEEE Power Engineering Society General Meeting, Montreal, Que., Canada, 2006, 7 pp, doi: 10.1109/PES.2006.1709037.

[69] S. A. Mousavi, M. Sedighizadeh, A. Hekmati und M. Bigdeli, "Artificial neural network based method for temperature correction in FDS measurement of transformer insulation" (en), J. Phys. D: Appl. Phys., Jg. 53, Nr. 14, S. 145103, 2020, doi: 10.1088/1361-6463/ab62c2.

[70] M. Sippola und R. E. Sepponen, "Accurate prediction of high-frequency power-transformer losses and temperature rise", IEEE Trans. Power Electron., Jg. 17, Nr. 5, S. 835-847, 2002, doi: 10.1109/TPEL.2002.802193.

[71] W. Wang, Y. Liu, J. Bi, Y. Gong und Y. Deng, "Effect Factors Analysis of Frequency Domain Spectroscopy Test" in 2012 IEEE PES Asia-Pacific Power and Energy Engineering Conference (APPEEC), Shanghai, China, 2012, S. 1-5, doi: 10.1109/APPEEC.2012.6307328.

[72] B. Gustavsen und A. Semlyen, "A Robust Approach for System Identification in the Frequency Domain", IEEE Trans. Power Delivery, Jg. 19, Nr. 3, S. 1167-1173, 2004, doi: 10.1109/TPWRD.2003.822530.

[73] D. D. Macdonald, E. Sikora und G. Engelhardt, "Characterizing electrochemical systems in the frequency domain" (en), Electrochimica Acta, Jg. 43, 1-2, S. 87-107, 1998, doi: 10.1016/s00134686(97)00238-7.

[74] R. Srinivasan, B. G. Carkhuff, M. H. Butler und A. C. Baisden, "Instantaneous measurement of the internal temperature in lithium-ion rechargeable cells", Electrochimica Acta, Jg. 56, Nr. 17, S. 6198-6204, 2011, doi:

10.1016/j.electacta.2011.03.136.

[75] R. R. Richardson und D. A. Howey, "Sensorless Battery Internal Temperature Estimation Using a Kalman Filter With Impedance Measurement", IEEE Trans. Sustain. Energy, Jg. 6, Nr. 4, S. 1190- 1199, 2015, doi: 10.1109/TSTE.2015.2420375.

[76] Y. Beck und R. Machlev, "Harmonie Loads Classification by Means of Currents' Physical Components", Energies, Jg. 12, Nr. 21, S. 4137, 2019, doi: 10.3390/en12214137.

[77] P. Netzharmonie, "Netzharmonie Schlussbericht: FKZ 0325757A-L".

[78] M. Li, C. Zhou und W. Zhou, "A Revised Model for Calculating HV Cable Sheath Current Under Short-Circuit Fault Condition and Its Application for Fault Location-Part 1: The Revised Model", IEEE Trans. Power Delivery, Jg. 34, Nr. 4, S. 1674-1683, 2019, doi: 10.1109/TPWRD.2019.2918159.

[79] IEC 60544: Electrical insulating materials - Determination of the effects of ionizing radiation - Part 1: Radiation interaction and dosimetry, IEC, Jun. 2013.

[80] M. Celina, K. T. Gillen, J. Wise und R. L. Clough, "Anomalous aging phenomena in a crosslinked polyolefin cable insulation", Radiation Physics and Chemistry, Jg. 48, Nr. 5, S. 613-626, 1996, doi: 10.1016/0969-806X(96)00083-7.

[81] E. Carpaneto, G. Chicco, R. Napoli und M. Scutariu, "Electricity customer classification using frequency-domain load pattern data", International Journal of Electrical Power & Energy Systems, Jg. 28, Nr. 1, S. 13-20, 2006, doi: 10.1016/j.ijepes.2005.08.017.

[82] H. Li, Z. Wang, T. Hong, A. Parker und M. Neukomm, "Characterizing patterns and variability of building electric load profiles in time and frequency domains", Applied Energy, Jg. 291, S. 116721, 2021, doi: 10.1016/j.apenergy.2021.116721.

[83] S. Zhong und K.-S. Tam, "A Frequency Domain Approach to Characterize and Analyze Load Profiles", IEEE Trans. Power Syst., Jg. 27, Nr. 2, S. 857-865, 2012, doi: 10.1109/TPWRS.2011.2170592.

**Patentansprüche**

1. Verfahren zum Ermitteln wenigstens einer thermischen Kenngröße eines elektrischen Systems (1) anhand einer Auswertung von Resonanzstellen (R1, R2, R3) des elektrischen Systems (1), mit folgenden Schritten:

   a) Beaufschlagen des elektrischen Systems (1) mit einer Systemanregung, die eine oder mehrere vorab ermittelte Anregungsfrequenzen beinhaltet, die zum Anregen des elektrischen Systems (1) an einer oder mehreren vorab ermittelten Resonanzstellen (R1, R2, R3) des elektrischen Systems geeignet sind,
   b) Messen wenigstens des Eingangsstroms ($I_{Ein}$) und des Ausgangsstroms ($I_{Aus}$) des elektrischen Systems (1) und/oder anderer elektrischer Kenngrößen, aus denen die frequenz- und zeitabhängige Impedanz des elektrischen Systems (1) bestimmt werden kann,
   c) Ermitteln von Ergebnisgrößen durch Auswerten der in Schritt b) gemessenen elektrischen Kenngrößen an einer oder mehreren vorab ermittelten Resonanzstellen (R1, R2, R3) des elektrischen Systems (1) durch ein oder mehrere analytische Transformationsverfahren,
   d) Bestimmen wenigstens einer thermischen Kenngröße des elektrischen Systems (1) durch Inbeziehungsetzen der im Schritt c) ermittelten Ergebnisgrößen zu vorab für das elektrische System in einem definierten Nennzustand bestimmten charakteristischen Nenngrößen.

2. Verfahren nach Anspruch 1, **dadurch gekennzeichnet, dass** die Schritte a) bis d) des Anspruchs 1 in regelmäßigen oder unregelmäßigen Zeitabständen wiederholt werden.

3. Verfahren nach Anspruch 2, **dadurch gekennzeichnet, dass** die Zeitabstände verringert werden, wenn die bestimmte thermische Kenngröße sich einem vorbestimmten Grenzwert ($\alpha$) annähert.

4. Verfahren nach einem der Ansprüche 2 bis 3, **dadurch gekennzeichnet, dass** die Wiederholungsrate der Schritte a) bis d) des Anspruchs 1 in Abhängigkeit von einer oder mehreren der folgenden Kriterien festgelegt wird:

   i) Änderung der Netzimpedanz des elektrischen Systems (1) am Netzverknüpfungspunkt (NVP),
   ii) Plausibilität der Ergebnisgrößen,
   iii) Grad der Übereinstimmung der Ergebnisgrößen mit einem thermischen Modell des elektrischen Systems (1).

5. Verfahren nach einem der vorhergehenden Ansprüche, **dadurch gekennzeichnet, dass** automatisch wenigstens eine elektrische Belastungsgröße, mit der das elektrische System (1) belastet ist, verringert wird, wenn die bestimmte thermische Kenngröße einen vorbestimmten Grenzwert erreicht oder überschreitet.

6. Verfahren nach einem der vorhergehenden Ansprüche, **dadurch gekennzeichnet, dass** vorab in einem definierten Nennzustand des elektrischen Systems (1) folgende Schritte ausgeführt werden:

   a) Ermitteln von Resonanzstellen (R1, R2, R3) des elektrischen Systems (1),
   b) Ermitteln von Anregungsfrequenzen zum Anregen des elektrischen Systems (1) an einer oder mehreren Resonanzstellen (R1, R2, R3).

7. Verfahren nach einem der vorhergehenden Ansprüche, dass zusätzliche systemfremde Resonanzstellen erzeugt und zur Ermittlung des thermischen Zustands des elektrischen Systems (1) genutzt werden.

8. Verfahren nach einem der vorhergehenden Ansprüche, **dadurch gekennzeichnet, dass** das elektrische System (1) mindestens eine geerdete Energieübertragungsleitung aufweist, wobei für die Bestimmung der wenigstens einen thermischen Kenngröße wenigstens ein Schirmstrom der geerdeten Energieübertragungsleitung gemessen und ausgewertet wird.

9. Verfahren nach einem der vorhergehenden Ansprüche, **dadurch gekennzeichnet, dass** das elektrische System als eine Anordnung elektrischer Energieübertragungsleitungen ausgebildet ist.

10. Computerprogramm mit Programmcodemitteln eingerichtet zur Durchführung eines Verfahrens nach einem der Ansprüche 1 bis 9, wenn das Computerprogramm auf einem Rechner ausgeführt wird.

11. Messsystem (2) mit wenigstens einer Steuereinheit (20) und an die Steuereinheit (20) angeschlossenen Stromsensoren (21, 22, 23, 24), die zur Erfassung von Eingangsströmen $I_{Ein}$) und Ausgangsströmen ($I_{Aus}$) eines zu untersuchenden elektrischen Systems (1) eingerichtet sind, **dadurch gekennzeichnet, dass** die Steuereinheit (20) zur Durchführung des Verfahren nach einem der Ansprüche 1 bis 9 eingerichtet ist.

RLC Zweitor

RLC pseudo Zweitor

$Z_{DUT}$

$Z_{DUT}$

Fig. 1

DUT als verteiltes Parameter Modell

$Z_1$ $Z_1$ $Z_1$ $Z_1$ $Z_1$

Fig. 2

Abschnittweise verteiltes Parameter Modell

$Z_1$ $Z_1$ $Z_1$ $Z_2$ $Z_2$ $Z_2$ $Z_3$ $Z_3$ $Z_3$

Fig. 3

Zusatzimpedanz
Z$_{RLC}$ zur Erzeugung
einer Resonanzstelle

DUT

Messsystem

Netz/Anlage

Z$_{DUT}$

Z$_{RLC}$

1

4

2

3

**Fig. 4**

5

Quelle

51

52

53

Anregung

23    21

(A)

Z

12

DUT                    1

- Energieübertragungsleitungen
- Rotierende elek. Maschinen
- Ruhende elek. Maschinen
- Elektrochem. Energiewandler
- Elektrische Energiespeicher
- Lasten
- Wechselrichter
- Schutztechnik
- Aktive/passive Filter
- usw.

22

(A)

Z

11

Netz/
Anlage    3

20    Steuerung &
       Auswertung

**Fig. 5**

Fig. 6

**Anregesystem**    **Anregesignale**    **Anregespektrum**

A

B

Steuerung

- Single-Frequenz
- Multi-Frequenz
- Sweep (Imp.)
- Taktanpassung

C    Z

- Diskrete Taktung
- RPWM-Taktung

D    C

- Speicher entladen

E    2 | 1

- Betriebzustandswechsel

Fig. 7

Fig. 8

Fig. 9

Netz/
Anlage

Anregung

DUT

Netz/
Anlage

Fig. 10

Betriebstemperatur

Fig. 11

Fig. 12

Fig. 13

Fig. 14

Übertragungsverhalten $\alpha = I_{aus}/I_{ein}$, 8 km, 150 kHz, $Z_{NVP}$=50+5i Ohm

Fig. 15

Fig. 16

Fig. 17

Fig. 18

Europäisches Patentamt

European Patent Office

Office européen des brevets

## EUROPÄISCHER RECHERCHENBERICHT

**Nummer der Anmeldung**

EP 23 15 6533

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 388 803 B1 (EBM PAPST MULFINGEN GMBH & CO KG [DE]) 1. Juli 2020 (2020-07-01) * Zusammenfassung * * Absätze [0001], [0002], [0010] – [0020] * ----- | 1-11 | INV. G01K7/00 |
| X | DE 10 2011 084320 A1 (ENDRESS & HAUSER WETZER GMBH [DE]) 18. April 2013 (2013-04-18) * Zusammenfassung * * Absätze [0001], [0004] – [0009] * ----- | 1,10,11 | |

**RECHERCHIERTE SACHGEBIETE (IPC)**

G01K

Der vorliegende Recherchenbericht wurde für alle Patentansprüche erstellt

| Recherchenort | Abschlußdatum der Recherche | Prüfer |
|---|---|---|
| Den Haag | 10. August 2023 | Bagnera, Carlo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 6533

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2023

| Im Recherchenbericht angeführtes Patentdokument | Datum der Veröffentlichung | Mitglied(er) der Patentfamilie | Datum der Veröffentlichung |
|---|---|---|---|
| EP 3388803 B1 | 01-07-2020 | DE 102017108112 A1 | 18-10-2018 |
| | | EP 3388803 A1 | 17-10-2018 |
| | | ES 2820281 T3 | 20-04-2021 |
| DE 102011084320 A1 | 18-04-2013 | KEINE | |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2385381 A

- EP 3010149 B1


**In der Beschreibung aufgeführte Nicht-Patentliteratur**

- **A. MORCHED ; L. MARTI ; J. OTTEVANGERS.** A high frequency transformer model for the EMTP. *IEEE Trans. Power Delivery,* 1993, vol. 8 (3), 1615-1626
- **A. MORCHED ; B. GUSTAVSEN ; M. TARTIBI.** A universal model for accurate calculation of electromagnetic transients on overhead lines and underground cables. *IEEE Trans. Power Delivery,* 1999, vol. 14 (3), 1032-1038
- **A. S. MORCHED ; J. H. OTTEVANGERS ; L. MARTI.** Multi-port frequency dependent network equivalents for the EMTP. *IEEE Trans. Power Delivery,* 1993, vol. 8 (3), 1402-1412
- Finding Danger where It's Impossible to Look. Yokogawa Electric Corporation, 30. Mai 2022
- Monitoring Electrical Cable Challenge: The Future of Underground Inspection. HeroX, 30. Mai 2022
- **D. CLEMENTS ; P. MANCARELLA.** Risk of cable overheating and premature ageing due to load control measures. IEEE Manchester PowerTech, 2017, 1-5
- **K. WU et al.** Study on pyrolysis characteristics of polyethylene outer sheath of 110kV power cable under overheating defect. *2021 IEEE International Conference on Emergency Science and Information Technology (ICESIT), Chongqing, China,* 22. November 2021, 307-310
- *Monitoringbericht,* 2021
- **W. ZHU ; X. WANG ; A. LIANG ; Y. ZHAO ; X. FAN ; G. LIU.** Thermal Effect of Short-term Overload on High-voltage Cross-linked Polyethylene (XLPE) Cable Insulation. *IOP Conf. Ser.: Mater. Sci. Eng.,* 2020, vol. 746 (1), 12001
- **Y.-C. YU ; S.-W. JEE.** Investigation on the Ignition of Self-Regulating Heating Cables due to Overheating. *Fire Sci. Eng.,* 2021, vol. 35 (6), 100-104
- *DIN IEC 62895 (VDE 0276-2895),* Februar 2019
- **S. ALI ; A. HANIF ; Q. AHMED.** Review in thermal effects on the performance of electric motors. *2016 International Conference on Intelligent Systems Engineering (ICISE),* 2016

- **R. ROTHE ; K. HAMEYER.** Life expectancy calculation for electric vehicle traction motors regarding dynamic temperature and driving cycles. *Drives Conference (IEMDC), Niagara Falls, ON, Canada,* 2011, 1306-1309
- **C. KRAL ; A. HAUMER ; S. B. LEE.** Innovative thermal model for the estimation of permanent magnet and stator winding temperatures. *2012 IEEE Energy Conversion Congress and Exposition (ECCE), Raleigh, NC, USA,* 2012, 2704-2711
- **OLIVER WALLSCHEID ; TOBIAS HUBER ; WILHELM PETERS ; JOACHIM B¨OCKER.** Real-Time Capable Methods to Determine the Magnet Temperature of Permanent Magnet Synchronous Motors - A Review. IEEE, 29. Oktober 2014
- **T. SEBASTIAN.** Temperature effects on torque production and efficiency of PM motors using NdFeB magnets. *IEEE Trans. on Ind. Applicat.,* 1995, vol. 31 (2), 353-357
- **N. AMANN ; J. BOCKER ; F. PRENNER.** Active Damping of Drive Train Oscillations for an Electrically Driven Vehicle. *IEEE/ASME Trans. Mechatron.,* 2004, vol. 9 (4), 697-700
- **T. ORLIK ; J. KLOCK ; W. SCHUMACHER.** Influence of magnetic saturation on sensorless-controlled interior permanent magnet synchronous motors. *2013 15th European Conference on Power Electronics and Applications (EPE), Lille, France,* 02. September 2013, 1-10
- **OLIVER WALLSCHEID ; PROF. DR.-ING. JOACHIM BÖCKER.** Wirkungsgradoptimale Arbeitspunktsteuerung für einen permanenterregten Synchronmotor mit vergrabenen Magneten unter Berücksichtigung von Temperatureinflüssen Efficiency-Optimal Operation Point Control for an Interior Perma-nent Magnet Synchronous Motor Considering Temperature Varia-tions. *Conference: Internationaler ETG-Kongress,* 2013, vol. 2013, https://www.researchgate.net/publication/260793787 Wirkungsgradoptimale Arbeitspunktsteuerung_fur_einen_permanenterregten_Synchron motor_mit_vergrabenen_Magneten_unter_ Berucksichtigung_von_Temperatureinflussen

- **M. Y. FROLOV ; A. G. FISHOV.** Electric parameters identification of synchronous generator connecting to the grid. *2016 11th International Forum on Strategie Technology (IFOST), Novosibirsk, Russia,* 2016, 243-246
- **Y. DU ; M. ZAHN ; N. ALTAMIRANO ; M. SARDA.** Moisture and temperature effects on the dielectric spectrum of transformer pressboard: Conference on Electrical Insulation and Dielectric Phenomena. IEEE Service Center, 20. Oktober 2002
- **J. H. YEW ; M. K. PRADHAN ; T. K. SAHA.** Effects of moisture and temperature on the frequency domain spectroscopy analysis of power transformer insulation. *Energy Society General Meeting, Pittsburgh, PA, USA,* 2008, 1-8
- **J. HILL ; Z. WANG ; Q. LIU ; C. KRAUSE ; G. WILSON.** Analysing the power transformer temperature limitation for avoidance of bubble formation. *High Voltage,* 2019, vol. 4 (3), 210-216
- **S. A. MOUSAVI ; M. SEDIGHIZADEH ; A. HEKMATI ; M. BIGDELI.** Artificial neural network based method for temperature correction in FDS measurement of transformer insulation. *J. Phys. D: Appl. Phys.,* 2020, vol. 53 (14), 145103
- **T. LOCHNER ; R. M. KLUGE ; J. FICHTNER ; H. A. EI-SAYED ; B. GARLYYEV ; A. S. BANDARENKA.** Temperature Effects in Polymer Electrolyte Membrane Fuel Cells. *ChemElectroChem,* 2020, vol. 7 (17), 3545-3568
- **A. KRAYTSBERG ; Y. EIN-ELI.** Review of Advanced Materials for Proton Exchange Membrane Fuel Cells. *Energy Fuels,* 2014, vol. 28 (12), 7303-7330
- **ANDREAS VATH.** *Dreidimensionale dynamische Modellierung und Berechnung von Polymer-Elektrolyt-Membran-Brennstoffzellensystemen,* 2009
- **KEJUN QIAN ; CHENGKE ZHOU ; VUE YUAN ; MALCOLM ALLANL.** Temperature Effect on Electric Vehicle Battery Cycle Life in Vehicle-to-Grid Applications: China International Conference on Electricity Distribution (CICED). IEEE, 13. September 2010
- **W. XU ; J. XU ; B. LIU ; J. LIU ; X. YAN.** A multi-timescale adaptive dual particle filter for state of charge estimation of lithium-ion batteries considering temperature effect. *Energy Sei Eng,* 2020, vol. 8 (8), 2784-2798
- **K. LI ; F. WEI ; K. J. TSENG ; B.-H. SOONG.** A Practical Lithium-Ion Battery Model for State of Energy and Voltage Responses Prediction Incorporating Temperature and Ageing Effects. *IEEE Trans. Ind. Electron.,* 2018, vol. 65 (8), 6696-6708
- **K. LIU ; C. ZOU ; K. LI ; T. WIK.** Charging Pattern Optimization for Lithium-Ion Batteries With an Electrothermal-Aging Model. *IEEE Trans. Ind. Inf.,* 2018, vol. 14 (12), 5463-5474
- **P. KRECZANIK ; P. VENET ; A. HIJAZI ; G. CLERC.** Study of Supercapacitor Aging and Lifetime Estimation According to Voltage, Temperature, and RMS Current. *IEEE Trans. Ind. Electron.,* 2014, vol. 61 (9), 4895-4902
- **R. KRISTINA SCHNEIDER BARCELOS ; W. CARDOSO CELESTE ; L. OTAVIO RIGO JUNIOR ; G. DE LORENA DINIZ CHAVES.** Identification of Similar Loads for Electric Power Management in Smart Grid. *IEEE Latin Am. Trans.,* 2019, vol. 17 (08), 1318-1325
- *Thermal degradation of polyimide insulation and its effect on electromagnetic coil impedance,* 2017, https://www.mfpt.org/wp-content/uploads/2019/10/paper- -jameson.pdf
- PCIM Europe 2018: International Exhibition and Conference for Power Electronics, Intelligent Motion, Renewable Energy and Energy Management. VDE, 05. Juni 2018
- **M. ALY ; E. M. AHMED ; M. SHOYAMA.** Developing new lifetime prolongation SVM algorithm for multilevel inverters with thermally aged power devices. *IET Power Electronics,* 2017, vol. 10 (15), 2248-2256
- **X. PERPIÑÀ ; A. CASTELLAZZI ; M. PITON ; M. MERMET-GUYENNET ; J. MILLÁN.** Failure-relevant abnormal events in power inverters considering measured IGBT module temperature inhomogeneities. *Microelectronics Reliability,* 2007, vol. 47, 1784-1789
- **H. BESSEI.** Sicherungshandbuch: Starkstromsicherungen ; das Handbuch für Anwender von Niederspannungs- und Hochspannungssicherungen. Kerschensteiner, 2011, vol. 5
- **G. ZIEGLER.** Digitaler Differentialschutz: Grundlagen und Anwendungen. Publicis Publ, 2013, vol. 2
- **K. GOURAMANIS ; C. DEMOULIAS.** Cable Overheating in an Industrial Substation Feeder Due to Untransposed Power Cables - Measurement and Simulation. *EUROCON 2005 - The International Conference on "Computer as a Tool", Belgrade, Serbia and Montenegro,* 2005, 1438-1441
- **A. HOCHRAINER.** Symmetrische Komponenten in Drehstromsystemen. Springer Berlin Heidelberg, 1957
- Ageing mechanisms and diagnostics for power cables - an overview. *IEEE Electr. Insul. Mag.,* 2001, vol. 17 (1), 14-22
- **V. A. SHIKHIN ; A. E. KOCHENGIN ; G. P. PAVLIUK.** Significant Events Detection and Identification through Electrical Grid Load Profile. *2018 Renewable Energies, Power Systems & Green Inclusive Economy (REPS-GIE), Casablanca,* 2018, 1-5

- **FROLOV M. YU. ; FISHOV A. G.** Identification of Synchronous Generator Electric Parameters Connected to the Distribution Grid. *Problems of the Regional Energetics,* 2017, vol. 33 (1), 32-39, https://doai.org/article/070bf5bb2b1447ac9d23ca4c77f01541
- **E. BULYCHEVA ; S. YANCHENKO.** Real-time harmonic identification under varying grid conditions. *Serb J Electr Eng,* 2021, vol. 18 (1), 29-48
- **R. MCCARTY ; R. PIPER.** Voltage-Current Curves to Characterize Thermoelectric Generators'' (En;en). *J. Electron. Mater.,* 2015, vol. 44 (6), 1896-1901
- **L. PERETTO et al.** Monitoring Cable current and Laying Environment Parameters for Assessing the Aging Rate of MV Cable Joint Insulation. *2018 IEEE Conference on Electrical Insulation and Dielectric Phenomena (CEIDP), Cancun,* 2018, 390-393
- **F. DONAZZI ; E. OCCHINI ; A. SEPPI.** Soil thermal and hydrological characteristics in designing underground cables. *Proc. Inst. Electr. Eng. UK,* 1979, vol. 126 (6), 506
- **P. CARAMIA ; G. CARPINELLI ; A. RUSSO ; P. VERDE.** Estimation of thermal useful life of MV/LV cables in presence of harmonics and moisture migration. *2003 IEEE Bologna Power Tech, Bologna, Italy,* 2003, 130-134
- **C. HOLYK ; G. J. ANDERS.** Power Cable Rating Calculations - A Historical Perspective [History. *IEEE Ind. Appl. Mag,* 2015, vol. 21 (4), 6-64
- **Z. YU ; S. XIAOHUI ; L. JIANFANG ; G. FEI.** Cable Overheating Risk Warning Method Based on Impedance Parameter Estimation in Distribution Network. *IOP Conf. Ser.: Mater. Sci. Eng.,* 2017, vol. 199 (1), 12044
- **A. JAMALI-ABNAVI ; H. HASHEMI-DEZAKI ; A. AHMADI ; E. MAHDAVIMANESH ; M.-J. TAVAKOLI.** Harmonic-based thermal analysis of electric arc furnace's power cables considering even current harmonics, forced convection, operational scheduling, and environmental conditions. *International Journal of Thermal Sciences,* 2021, vol. 170, 107135
- **H. M. LEE ; G. S. LEE ; G.-Y. KWON ; S. S. BANG ; Y.-J. SHIN.** Industrial Applications of Cable Diagnostics and Monitoring Cables via Time-Frequency Domain Reflectometry. *IEEE Sensors J.,* 2021, vol. 21 (2), 1082-1091
- **K. WALCZAK ; J. GIELNIAK.** Temperature Distribution in the Insulation System of Condenser-Type HV Bushing-Its Effect on Dielectric Response in the Frequency Domain. *Energies,* 2021, vol. 14 (13), 4016
- **A. SPECHT ; J. BOCKER.** Observer for the rotor temperature of IPMSM. *2010 14th International Power Electronics and Motion Control Conference (EPEIPEMC 2010), Ohrid, Macedonia,* 2010
- **A. SPECHT ; O. WALLSCHEID ; J. BOCKER.** Determination of rotor temperature for an interior permanent magnet synchronous machine using a precise flux observer. *2014 International Power Electronics Conference (IPEC-Hiroshima 2014 ECCE-ASIA), Hiroshima, Japan,* 2014, 1501-1507
- **M. GANCHEV ; C. KRAL ; T. WOLBANK.** Hardware and software implementation of sensorless rotor temperature estimation technique for Permanent Magnet Synchronous Motor. *2012 Electrical Systems forAircraft, Railway and Ship Propulsion (ESARS), Bologna, Italy,* 2012, 1-6
- **M. GANCHEV ; C. KRAL ; T. WOLBANK.** Sensorless rotor temperature estimation of permanent magnet synchronous motor under load conditions. *2012 - 38th Annual Conference of IEEE Industrial Electronics, Montreal, QC, Canada,* 2012, 1999-2004
- **D. D. REIGOSA ; F. BRIZ ; P. GARCIA ; J. M. GUERRERO ; M. W. DEGNER.** Magnet Temperature Estimation in Surface PM Machines Using High-Frequency Signal Injection. *IEEE Trans. on Ind. Applicat.,* 2010, vol. 46 (4), 1468-1475
- **D. REIGOSA ; F. BRIZ ; M. W. DEGNER ; P. GARCIA ; J. M. GUERRERO.** Magnet temperature estimation in surface PM machines during six-step operation. *2011 IEEE Energy Conversion Congress and Exposition (ECCE), Phoenix, AZ, USA,* 2011, 2429-2436
- **C. KRAL ; A. HAUMER ; S. B. LEE.** A Practical Thermal Model for the Estimation of Permanent Magnet and Stator Winding Temperatures. *IEEE Trans. Power Electron.,* 2014, vol. 29 (1), 455-464
- **T. BAUML ; C. JUNGREUTHMAYER ; C. KRAL.** n innovative parametrization method for a thermal equivalent circuit model of an interior permanent magnet synchronous machine. *IECON 2011 - 37th Annual Conference of IEEE Industrial Electronics, Melbourne, Vic, Australia,* 2011, 1746-1751
- **X. LU ; S. ZHOU ; C. ZHAO.** Finite element method analyses of ambient temperature effects on characteristics of piezoelectric motors. *Journal of Intelligent Material Systems and Structures,* 2014, vol. 25 (3), 364-377
- **S. CHENG ; DU YI ; J. A. RESTREPO ; P. ZHANG ; T. G. HABETLER.** A Nonintrusive Thermal Monitoring Method for Induction Motors Fed by Closed-Loop Inverter Drives. *IEEE Trans. PowerElectron,* 2012, vol. 27 (9), 4122-4131
- **J. H. YEW ; T. K. SAHA ; A. J. THOMAS.** Impact of temperature on the frequency domain dielectric spectroscopy for the diagnosis of power transformer insulation. *2006 IEEE Power Engineering Society General Meeting, Montreal, Que., Canada,* 2006, 7

- **S. A. MOUSAVI ; M. SEDIGHIZADEH ; A. HEKMATI ; M. BIGDELI.** Artificial neural network based method for temperature correction in FDS measurement of transformer insulation'' (en). *J. Phys. D: Appl. Phys,* 2020, vol. 53 (14), 145103
- **M. SIPPOLA ; R. E. SEPPONEN.** Accurate prediction of high-frequency power-transformer losses and temperature rise. *IEEE Trans. Power Electron.,* 2002, vol. 17 (5), 835-847
- **W. WANG ; Y. LIU ; J. BI ; Y. GONG ; Y. DENG.** Effect Factors Analysis of Frequency Domain Spectroscopy Test. *2012 IEEE PES Asia-Pacific Power and Energy Engineering Conference (APPEEC), Shanghai, China,* 2012, 1-5
- **B. GUSTAVSEN ; A. SEMLYEN.** A Robust Approach for System Identification in the Frequency Domain. *IEEE Trans. Power Delivery,* 2004, vol. 19 (3), 1167-1173
- **D. D. MACDONALD ; E. SIKORA ; G. ENGELHARDT.** Characterizing electrochemical systems in the frequency domain. *Electrochimica Acta,* 1998, vol. 43 (1-2), 87-107
- **R. SRINIVASAN ; B. G. CARKHUFF ; M. H. BUTLER ; A. C. BAISDEN.** Instantaneous measurement of the internal temperature in lithium-ion rechargeable cells. *Electrochimica Acta,* 2011, vol. 56 (17), 6198-6204
- **R. R. RICHARDSON ; D. A. HOWEY.** Sensorless Battery Internal Temperature Estimation Using a Kalman Filter With Impedance Measurement. *IEEE Trans. Sustain. Energy,* 2015, vol. 6 (4), 1190-1199
- **Y. BECK ; R. MACHLEV.** Harmonie Loads Classification by Means of Currents' Physical Components. *Energies,* 2019, vol. 12 (21), 4137
- **P. NETZHARMONIE.** *Netzharmonie Schlussbericht: FKZ 0325757A-L*
- **M. LI ; C. ZHOU ; W. ZHOU.** A Revised Model for Calculating HV Cable Sheath Current Under Short-Circuit Fault Condition and Its Application for Fault Location-Part 1: The Revised Model. *IEEE Trans. Power Delivery,* 2019, vol. 34 (4), 1674-1683
- IEC 60544: Electrical insulating materials - Determination of the effects of ionizing radiation - Part 1: Radiation interaction and dosimetry. *IEC,* Juni 2013
- **M. CELINA ; K. T. GILLEN ; J. WISE ; R. L. CLOUGH.** Anomalous aging phenomena in a crosslinked polyolefin cable insulation. *Radiation Physics and Chemistry,* 1996, vol. 48 (5), 613-626
- **E. CARPANETO ; G. CHICCO ; R. NAPOLI ; M. SCUTARIU.** Electricity customer classification using frequency-domain load pattern data. *International Journal of Electrical Power & Energy Systems,* 2006, vol. 28 (1), 13-20
- **H. LI ; Z. WANG ; T. HONG ; A. PARKER ; M. NEUKOMM.** Characterizing patterns and variability of building electric load profiles in time and frequency domains. *Applied Energy,* 2021, vol. 291, 116721
- **S. ZHONG ; K.-S. TAM.** A Frequency Domain Approach to Characterize and Analyze Load Profiles. *IEEE Trans. Power Syst.,* 2012, vol. 27 (2), 857-865